# NEUE EUROPÄISCHE PATENTSCHRIFT

(11) **EP 2 800 672 B2**
(45) Veröffentlichungstag und Bekanntmachung des Hinweises auf die Entscheidung über den Einspruch: **14.12.2022**
(45) Hinweis auf die Patenterteilung: 03.08.2016
(21) Anmeldenummer: 13708754.0
(22) Anmeldetag: 28.02.2013
(51) Int. Cl.: B60L 7/16, B60L 7/24, B60T 17/22, B60L 3/00

(54) **SCHIENENFAHRZEUGBREMSVORRICHTUNG**
RAIL VEHICLE BRAKE DEVICE
DISPOSITIF DE FREINAGE DE VÉHICULE SUR RAILS

(30) Priorität: 29.02.2012 DE 102012203132
(43) Veröffentlichungstag der Anmeldung: 12.11.2014
(73) Patentinhaber: Siemens Mobility GmbH, 81739 München (DE)
(72) Erfinder: SCHWINN, Jean-Pascal, 81539 München (DE); STÜTZLE, Thorsten, 90480 Nürnberg (DE); FÖRSTER, Till, 90763 Fürth (DE); HASSLER, Stefan, 91281 Kirchenthumbach (DE); HEILMANN, Reiner, 85658 Egmating (DE); WIESAND, Manfred, 90559 Burgthann (DE)
(86) Internationale Anmeldenummer: PCT/EP2013/054074
(87) Internationale Veröffentlichungsnummer: WO 2013/127942

(56) Entgegenhaltungen:
- EP-A1- 2 060 459
- EP-A1- 2 251 224
- EP-A2- 0 152 300
- EP-A2- 1 195 286
- EP-A2- 1 266 814
- EP-A2- 2 033 835
- WO-A1-2008/052696
- WO-A2-2013/127934
- DE-A1- 10 004 430
- DE-A1- 19 510 755
- DE-A1-102006 043 892
- DE-A1-102008 018 873
- DE-A1-102010 005 938
- DE-A1-102012 203 132
- DE-B3-102006 011 963
- US-A- 4 671 577
- US-A- 5 924 774
- US-A1- 2009 125 170
- US-A1- 2012 000 739
- KNORR-BREMSE Systeme für Schienenfahrzeuge GmbH FOPP (EP13708754 20170428)
- "Design of on-board computer system for Korean High-Speed Train" In: J-H LEE et al.: "Computers in Railways VII;", 2000 ISBN: 1-85312-826-0 pages 933-944,
- LIONGINAS LIUDVINAVICIUS et al.: "Electrodynamic Braking in High-Speed Rail Transport;", Transport, vol. XXII, no. 3, 2007, pages 178-186,

## Beschreibung

Die Erfindung betrifft eine Schienenfahrzeugbremsvorrichtung mit zumindest einer ersten elektrodynamischen Bremse, die eine Antriebseinheit, welche zumindest einen Antriebsmotor und eine Leistungsversorgungseinheit zum Versorgen des Antriebsmotors in einem Traktionsmodus der Antriebseinheit aufweist, und zumindest eine Bremsregelungseinheit umfasst, welche die jeweilige Leistungsversorgungseinheit und zumindest eine Bremssteuereinheit aufweist, die in einem ersten Bremsmodus die jeweilige Leistungsversorgungseinheit zur Bereitstellung einer Bremswirkung steuert.

Es sind Schienenfahrzeuge bekannt, bei welchen eine Bremskraft durch elektrische Motoren erzeugt wird. Die während der Bremsung von den Motoren generatorisch in elektrische Energie umgewandelte Bewegungsenergie des Fahrzeugs wird z.B. über einen Bremswiderstand in Wärme umgewandelt oder in das Bahnversorgungsnetz oder auch in einen Mobilspeicher zurückgeführt.

Neben der elektrodynamischen, generatorischen Bremse verfügen die Schienenfahrzeuge üblicherweise weiterhin über eine vollwertige Reibungsbremse, bei der die Bremswirkung auf pneumatischem, hydraulischem und/oder mechanischem Weg erreicht wird.

Bei Bremssystemen ist es üblich, zwischen den Bremsarten "Betriebsbremsung" und "Notbremsung" (auch "Schnellbremsung bzw. "Gefahrenbremsung" genannt) zu unterscheiden. Während die Betriebsbremsung der Geschwindigkeitsreduzierung des Zuges - auch bis in den Stillstand - dient, wird von der Notbremsung über diese Forderung hinaus restriktiver verlangt, die größtmögliche Sicherheit der Fahrgäste, des Personals und Dritter zu gewährleisten. Üblicherweise wird für die Betriebsbremsung die elektrodynamische Bremse bevorzugt eingesetzt.

Bei einer Notbremsung wird die generatorische Bremse in der Regel nicht ohne gleichzeitige Betätigung der Reibungsbremse eingesetzt. Der Grund hierfür liegt in der bisher geringeren Ausfallsicherheit der elektrodynamischen Bremse gegenüber der pneumatischen oder hydraulischen Reibungsbremse, sodass die größtmögliche Bremssicherheit bisher nur über die Reibungsbremsen erreicht werden kann.

Dies bedeutet allerdings im Extremfall, der bei Metrozügen üblicherweise vorliegt, dass ein Motorwagen eines Zuges mit der Reibungsbremse und der elektrodynamischen Bremse prinzipiell über zwei vollwertige Bremseinheiten verfügt, wobei jede für sich genommen innerhalb eines weiten Fahrgeschwindigkeitsbereichs ein genügend großes Bremsmoment erzeugen kann um die spezifizierten Bremswege einzuhalten, sodass in dieser Hinsicht die eine Bremseinheit anstelle der anderen genutzt werden könnte.

Die beiden Bremseinheiten weisen unterschiedliche Vorteile auf. Während die Reibungsbremse eine größere Sicherheit im Falle einer Notbremsung gewährleistet, weist die generatorische Bremse ökonomische Vorteile auf. So tritt beispielsweise kein Verschleiß bei Bremsbelägen und Bremsscheiben auf. Außerdem ist eine teilweise Nutzung der transformierten kinetischen Energie möglich.

Der Erfindung liegt die Aufgabe zugrunde, die Sicherheit der elektrodynamischen Bremse zu erhöhen.

Hierzu wird vorgeschlagen, dass die Schienenfahrzeugbremsvorrichtung zumindest eine Sensoreinheit, die dazu vorgesehen ist, zumindest eine Bremswirkungskenngröße für den ersten Bremsmodus der Bremse zu erfassen, und zumindest eine der ersten Bremse zugeordnete, von der Bremsregelungseinheit unabhängige erste Bremsüberwachungseinrichtung aufweist, die dazu vorgesehen ist, in einem ersten Überwachungsmodus die Bremswirkungskenngröße für die Einleitung einer Rückfallmaßnahme betreffend die Bremse zu berücksichtigen, wobei die Bremsüberwachungseinrichtung zumindest zwei Überwachungsvorrichtungen aufweist, die sich bezüglich ihrer konstruktiven und/oder algorithmischen Ausführung voneinander unterscheiden. Hierdurch kann eine Schienenfahrzeugbremsvorrichtung bereitgestellt werden, die ein vorteilhaftes Differenzierungsvermögen bei der Erkennung und Behandlung von Fehlern der Bremssteuerung und eine hohe Sicherheit in Bezug auf Systematische Fehler aufweist.

Im Vergleich zu einer herkömmlichen Lösung, bei welcher eine Gesamtverzögerung des Schienenfahrzeugs erfasst wird und abhängig von dieser eine in Bezug auf alle Bremssysteme des Schienenfahrzeugs undifferenzierte Rückfallmaßnahme eingeleitet wird, kann ein fehlerhafter Betrieb der Bremsregelungseinheit vorteilhafterweise als die Antriebseinheit betreffend erkannt werden und es kann eine Rückfallmaßnahme für die Bremse, zu welcher die Antriebseinheit gehört, gesondert eingeleitet werden.

Weist das Schienenfahrzeug zumindest eine zweite Antriebseinheit auf, welche mit deren Leistungsversorgungseinheit und zumindest einem zugeordneten Antriebsmotor Bestandteil einer zweiten elektrodynamischen Bremse ist, kann mittels der der ersten Bremse zugeordneten Bremsüberwachungseinrichtung eine vorteilhafte Lokalisierung eines Bremswirkungsverlusts bei der Antriebseinheit der ersten Bremse erreicht werden, wobei die Rückfallmaßnahme vorteilhaft für die erste Bremse eingeleitet wird und die zweite Bremse bei der Einleitung der Rückfallmaßnahme vorzugsweise unbetroffen verbleibt.

Unter einem "Berücksichtigen" der Bremswirkungskenngröße durch die Bremsüberwachungseinrichtung soll insbesondere verstanden werden, dass ein Auswerte- und Entscheidungsprozess, welcher zweckmäßigerweise in der Bremsüberwachungseinrichtung implementiert ist, auf Basis der Bremswirkungskenngröße erfolgt. Erfolgt die Einleitung der Rückfallmaßnahme auf der Basis mehrerer Auswerte- und Entscheidungsprozesse, sind alle an diesen teilnehmenden Einheiten des Schienenfahrzeugs als zur Bremsüberwachungseinrichtung gehörend zu betrachten.

Unter einer "von der Bremsregelungseinheit unabhängigen" Bremsüberwachungseinrichtung soll insbesondere verstanden werden, dass die in der Bremsüberwachungseinrichtung implementieren Auswerte- und Entscheidungsprozesse von Prozessen der Bremsregelungseinheit der ersten Bremse unabhängig sind. Durch die Unabhängigkeit der Bremsüberwachungseinrichtung von der Bremsregelungseinheit kann eine vorteilhafte Trennung der Steuerfunktionen und der Überwachungsfunktionen der ersten Bremse erreicht werden, wobei eine hohe Sicherheit bezüglich einer Verbreitung von systematischen Fehlern von einer Steuer- bzw. Regelungseinheit auf eine Überwachungseinheit erreicht werden kann. Im Vergleich zu einer Lösung, bei welcher das der Antriebseinheit zugeordnete Antriebssteuergerät an einem Auswerte- und Entscheidungsprozess einer Überwachung teilnimmt, kann eine vorteilhafte rückwirkungsfreie Ansteuerung und Überwachung der elektrodynamischen Bremse erreicht werden.

Die der ersten Bremse zugeordnete Bremsüberwachungseinrichtung und die Bremsregelungseinheit der ersten Bremse sind zweckmäßigerweise als voneinander physikalisch getrennte Einheiten ausgebildet.

Beispielsweise kann durch die Bremsüberwachungseinrichtung ein Vergleich der Bremswirkungskenngröße oder einer auf der Basis dieser ermittelten Größe mit einem Sollwert für eine ausreichende Bremswirkung der Bremse erfolgen. Unter "Berücksichtigen" kann insbesondere "Bearbeiten" oder "Auswerten" verstanden werden.

Unter einer "Bremswirkungskenngröße für den ersten Bremsmodus der Bremse" soll insbesondere eine Kenngröße verstanden werden, mittels welcher zumindest eine Information über eine Bremswirkung der elektrodynamischen Bremse in deren erstem Bremsmodus gewonnen werden kann. Auf der Grundlage der Bremswirkungskenngröße kann zweckmäßigerweise durch die Bremsüberwachungseinrichtung die der Antriebseinheit zugeordnete Bremswirkung ermittelt werden, die während der Ausführung des ersten Bremsmodus generiert wird bzw. generierbar ist.

Unter einer "Bremswirkung" kann insbesondere eine Bremskraft oder ein Bremsmoment verstanden werden, welches auf einen Schienenfahrzeugradsatz übertragbar ist. Ist die Antriebseinheit mit einer Antriebsachse antriebstechnisch gekoppelt, kann mit der Bremswirkungskenngröße die auf diese Antriebsachse bezogene Bremswirkung bestimmt und berücksichtigt werden. Ist die Antriebseinheit mit allen Antriebsachsen eines Drehgestells antriebstechnisch gekoppelt, kann mit der Bremswirkungskenngröße die auf das Drehgestell bezogene Bremswirkung bestimmt und berücksichtigt werden. Hiermit kann durch die Bremsüberwachungseinrichtung vorteilhaft eine achsenweise bzw. drehgestellweise Bremswirkung bestimmt und berücksichtigt werden.

Die Bremswirkung kann eine mittels der elektrodynamischen Bremse erzielte Bremswirkung oder eine durch einen Betrieb der Bremssteuereinheit erzielbare Bremswirkung sein. In der erstgenannten Alternative dient die Sensoreinheit dazu, zumindest eine Betriebskenngröße, wie z.B. eine momentane Beschleunigungskenngröße, eine Bremskraftkenngröße, eine Bremsmomentkenngröße usw. zu erfassen. In der letztgenannten Alternative kann die Sensoreinheit dazu dienen, durch die aktive Bremssteuereinheit, zur Steuerung der Leistungsversorgungseinheit erzeugte Steuersignale auszuwerten, um eine mit den Steuersignalen erzielbare Bremswirkung zu ermitteln.

Die Sensoreinheit kann von einem Sensor gebildet sein, welcher zur Erfassung der Bremswirkungskenngröße zweckmäßigerweise mit einem mit der Antriebseinheit antriebstechnisch gekoppelten Schienenfahrzeugradsatz gekoppelt ist. Die Sensoreinheit kann ferner einen Satz von Sensoren aufweisen, die jeweils eine Bremswirkungskenngröße ausgeben, wobei die Bremswirkungskenngrößen unterschiedlich voneinander ausgeführt sein können. Diese Bremswirkungskenngrößen können z.B. eine Bremskraft, ein Bremsmoment, eine Verzögerung, eine Leistung in einem Zwischenkreis usw. sein. Die Sensoreinheit kann von mehreren unabhängigen Bremsüberwachungseinrichtungen und/oder weiteren Funktionssystemen des Schienenfahrzeugs genutzt werden, wobei ein weiterer Sicherheitsgewinn dadurch erreicht werden kann, dass die Sensoreinheit rückwirkungsfrei verwendet wird. Dies kann z.B. dadurch erreicht werden, dass Leitungen zwischen der Sensoreinheit und den unterschiedlichen Systemen galvanisch entkoppelt werden, um die Systeme voneinander unabhängig zu halten.

Die Leistungsversorgungseinheit weist vorzugsweise steuerbare elektronische Elemente auf, die im Traktionsmodus gemäß einer Steuerungsstrategie - im Hinblick auf ein bestimmtes, zu erreichendes Antriebsmoment - zur Versorgung zumindest eines zugeordneten Antriebsmotors mit einer entsprechenden elektrischen Leistung gesteuert werden. Die steuerbaren Elemente sind insbesondere als Schalt- oder Ventilelemente ausgebildet, die mittels Schaltvorgängen entsprechend einer Schaltstrategie einen Leistungsstrom mit einer angepassten Spannung, Frequenz und/oder Stromstärke erzeugen, mit welchem der zugeordnete Antriebsmotor angetrieben wird. Insbesondere kann die Leistungsversorgungseinheit als Wechselrichter ausgebildet sein, welcher im Traktionsmodus die notwendige Energie aus einem Zwischenkreis, beispielsweise einem Gleichspannungszwischenkreis bezieht.

In einem Bremsmodus der elektrodynamischen Bremsen werden die jeweilige Leistungsversorgungseinheit bzw. deren steuerbare Elemente zweckmäßigerweise mittels der zugeordneten Bremssteuereinheit derart gesteuert, dass mittels des mindestens einen mit der Leistungsversorgungseinheit in Wirkverbindung stehenden Antriebsmotors ein auf eine Achse des Schienenfahrzeugs übertragbares Bremsmoment erzeugt wird.

Durch die erfindungsgemäßen zumindest zwei Überwachungsvorrichtungen kann eine vorteilhafte Redundanz in der Überwachungsaufgabe der Bremsüberwachungseinrichtung erreicht werden.

Durch den erfindungsgemäßen Einsatz unterschiedlicher Technologien für die Überwachungsvorrichtungen der Bremsüberwachungseinrichtung, die sich erfindungsgemäße bezüglich ihrer konstruktiven und/oder algorithmischen Ausführung voneinander unterscheiden, kann eine besonders hohe Sicherheit erreicht werden, da ein System mit einer diversitären Redundanz geschaffen werden kann. Besonders vorteilhaft kann die Ausbreitung eines für eine bestimmte Technologie spezifischen möglichen systematischen Fehlers von einer ersten Überwachungsvorrichtung auf eine zweite Überwachungsvorrichtung vermieden werden. Der Begriff "konstruktiv" bezieht sich vorzugsweise auf eine für die Überwachungsvorrichtung eingesetzte Hardware und der Begriff "algorithmisch" bezieht sich vorzugsweise auf eine Implementierung zumindest einer Überwachungsfunktion mittels einer Software. Durch die konstruktiven und/oder algorithmischen Unterschiede zwischen den Überwachungsvorrichtungen der Bremsüberwachungseinrichtung können vorteilhaft unterschiedliche Implementierungen des ersten Überwachungsmodus erreicht werden.

In einer vorteilhaften Ausführung der Erfindung wird vorgeschlagen, dass die Überwachungsvorrichtungen dazu vorgesehen sind, zumindest eine Überwachungsfunktion des ersten Überwachungsmodus zumindest teilweise im Zusammenwirken durchzuführen. Unter einer Durchführung einer Überwachungsfunktion, die durch mehrere Einheiten "zumindest teilweise im Zusammenwirken" erfolgt, soll insbesondere verstanden werden, dass die Überwachungsfunktion zumindest einen Funktionsschritt, welcher von jeder Einheit jeweils zur Bereitstellung eines unabhängigen Ergebnisses ausgeführt wird, und wenigstens einen Funktionsschritt aufweist, dessen Ausführung auf der Basis einer Kombination der Ergebnisse erfolgt. Hierdurch kann ein hoher Schutz gegen systematische Fehler erreicht werden, indem beispielsweise die Ergebnisse unabhängiger Auswertungen der Bremswirkungskenngröße in jeder Einheit miteinander kombiniert werden, bevor die Rückfallmaßnahme eingeleitet wird.

Besonders vorteilhaft können durch die Sensoreinheit zumindest zwei in ihrer Art unterschiedliche Bremswirkungskenngrößen erfasst werden, die jeweils durch eine unterschiedliche Überwachungsvorrichtung ausgewertet werden. Dabei werden die Bremswirkungskenngrößen vorzugsweise unabhängig voneinander erfasst, wodurch ein erhöhter Schutz gegen systematische Fehler erreicht werden kann. Die Art der erfassten Bremswirkungskenngrößen kann zweckmäßigerweise durch die Ausführung des jeweiligen Überwachungsmechanismus der Überwachungsvorrichtungen bestimmt sein.

Bezüglich der algorithmischen Ausführung der Überwachungsvorrichtungen wird vorgeschlagen, dass die Überwachungsvorrichtungen jeweils eine Software für die Ausführung einer Überwachungsfunktion aufweisen, wobei die Software unterschiedlich implementiert sind. Unter einer "unterschiedlichen Implementierung" einer Überwachungsfunktion kann insbesondere verstanden werden, dass sich die zur Ausführung dieser Überwachungsfunktion vorgesehene Software der ersten Überwachungsvorrichtung von der zur Ausführung der Überwachungsfunktion vorgesehene Software der zweiten Überwachungsvorrichtung hinsichtlich des Algorithmus und/oder des Programmiercodes voneinander unterscheidet. Es ist hierbei vorteilhaft, wenn die Software der ersten und der zweiten Überwachungsvorrichtungen mittels unterschiedlicher Entwurfswerkzeuge erstellt wird. Weiterhin ist vorteilhaft, wenn die Software der Überwachungsvorrichtungen von unterschiedlichen Personen entwickelt wird.

Bezüglich der konstruktiven Ausführung wird außerdem vorgeschlagen, dass eine der Überwachungsvorrichtungen als eine reine hardwaretechnische Steuerung ausgebildet ist. Hierbei soll insbesondere verstanden werden, dass die für die Ausführung der Überwachungsfunktion relevante, hardwaretechnische Steuerung ohne Softwareeinsatz erfolgt.

Der Schutz gegen systematische Fehler bei der Ausführung des ersten Überwachungsmodus kann außerdem erhöht werden, wenn die Schienenfahrzeugbremsvorrichtung eine Überwachungseinheit aufweist, die dazu dient, den ersten Überwachungsmodus zumindest teilweise im Zusammenwirken mit den Überwachungsvorrichtungen durchzuführen. Die Überwachungsvorrichtungen und die Überwachungseinheit sind vorzugsweise von getrennten Strukturen bzw. jeweils durch eine getrennte Hardware gebildet.

Es kann eine vorteilhafte hohe, diversitäre Redundanz in einem Überwachungsmodus erreicht werden, wenn sich die Überwachungsvorrichtungen und die Überwachungseinheit bezüglich ihrer konstruktiven und/oder algorithmischen Ausführung voneinander unterscheiden.

In einer vorteilhaften Weiterbildung der Erfindung wird vorgeschlagen, dass die Überwachungsvorrichtungen der Bremsüberwachungseinrichtung und die Überwachungseinheit jeweils dazu vorgesehen sind, bei der Ausführung des ersten Überwachungsmodus abhängig von einer Bremswirkungskenngröße ein Fehlersignal auszugeben, wobei diese Bremsüberwachungseinrichtung wenigstens eine Auslöseeinheit aufweist, die mit den Überwachungsvorrichtungen und der Überwachungseinheit derart in Wirkverbindung steht, dass die Einleitung der Rückfallmaßnahme das Vorliegen von zumindest zwei Fehlersignalen voraussetzt.. Hierdurch kann ein hoher Schutz gegen eine Fehleinleitung der Rückfallmaßnahme vorteilhaft erreicht werden. Ein Fehlersignal wird von einer Überwachungsvorrichtung bzw. von der Überwachungseinheit zweckmäßigerweise ausgegeben, wenn durch eine Auswertung der ersten Bremswirkungskenngröße in der Überwachungsvorrichtung bzw. in der Überwachungseinheit eine fehlerhafte Bremswirkung der Bremse erkannt wird. Es kann von den Überwachungsvorrichtungen und der Überwachungseinheit eine gleiche Bremswirkungskenngröße berücksichtigt werden. Alternativ kann für zumindest zwei dieser Einheiten jeweils eine unterschiedliche Bremswirkungskenngröße berücksichtigt werden. Insbesondere können die Überwachungsvorrichtungen und die Überwachungseinheit jeweils eine unterschiedliche Bremswirkungskenngröße berücksichtigen.

In einer weiteren Ausbildung der Erfindung wird vorgeschlagen, dass die Bremsregelungseinheit zumindest zwei Bremssteuereinheiten und eine Schalteinheit aufweist, die dazu vorgesehen ist, zur Durchführung der Rückfallmaßnahme zwischen dem ersten Bremsmodus der Bremsregelungseinheit, in welchem die erste Bremssteuereinheit die Leistungsversorgungseinheit zur Bereitstellung einer Bremswirkung steuert, und einem zweiten Bremsmodus der Bremsregelungseinheit umzuschalten, in welchem die zweite Bremssteuereinheit die Leistungsversorgungseinheit zur Bereitstellung einer Bremswirkung steuert. Hierdurch kann eine vorteilhafte Redundanz in der Steuerungsfunktion der Bremsregelungseinheit bereitgestellt werden, wobei die Ausführung des zweiten Bremsmodus vorteilhafterweise als Rückfallmaßnahme im Fall einer unzureichenden Bremswirkung im ersten Bremsmodus dienen kann.

Im zweiten Bremsmodus der Bremsregelungseinheit kann die jeweilige erste Bremssteuereinheit weiter betrieben werden, indem die zweite Bremssteuereinheit mittels der Schalteinheit zugeschaltet wird. Hierbei soll mittels der zweiten Bremssteuereinheit eine fehlende Bremswirkung ausgeglichen werden. Es wird in einer bevorzugten Ausführung der Erfindung jedoch vorgeschlagen, dass sich die erste Bremssteuereinheit im zweiten Bremsmodus in einem inaktiven Zustand befindet. Hierdurch können unerwünschte Auswirkungen eines fehlerhaften Betriebs der ersten Bremssteuereinheit weitestgehend vermieden werden. Die Schalteinheit bewirkt hierbei zweckmäßigerweise ein Umschalten zwischen beiden Bremssteuereinheiten.

Um die Zuverlässigkeit der elektrodynamischen Bremse zu erhöhen wird in einer weiteren Ausführung der Erfindung vorgeschlagen, dass die Schienenfahrzeugbremsvorrichtung einen Testmodus aufweist, in welchem die Schalteinheit der Bremsregelungseinheit getestet wird.

Die Bremssteuereinheiten unterscheiden sich vorteilhafterweise bezüglich ihrer konstruktiven und/oder algorithmischen Ausführung voneinander. Die Unterschiede in der konstruktiven Ausführung und/oder in der algorithmischen Ausführung betreffen vorzugsweise Funktionen der Bremssteuereinheiten, die für die Ansteuerung der Leistungsversorgungseinheit bzw. von deren steuerbaren Elementen relevant sind. In dieser vorgeschlagenen Ausführungsform können die Bremssteuereinheiten - bei einer Ausführung der Leistungsversorgungseinheit mit Schalt- oder Ventilelementen - die Schalt- oder Ventilelemente gemäß zweier unterschiedlicher Schaltstrategien steuern. Hierbei ist die Schaltstrategie der ersten Bremssteuereinheit vorteilhafterweise unterschiedlich von der Schaltstrategie der zweiten Bremssteuereinheit.

In diesem Zusammenhang wird vorgeschlagen, dass die Bremsüberwachungseinrichtung im ersten Überwachungsmodus eine erste Überwachungsfunktion, bei welcher diese Bremsüberwachungseinrichtung als erste Bremswirkungsüberwachungseinheit ausgebildet ist, die dazu vorgesehen ist, die Bremse in deren erstem Bremsmodus zu überwachen, und zumindest eine zweite Überwachungsfunktion aufweist, bei welcher diese Bremsüberwachungseinrichtung als zweite Bremswirkungsüberwachungseinheit ausgebildet ist, die dazu vorgesehen ist, die Bremse in deren zweitem Bremsmodus zu überwachen. Hierdurch kann die erste Bremse vorteilhaft sowohl in deren erstem Bremsmodus als auch in deren zweitem Bremsmodus durch die gleiche Bremsüberwachungseinrichtung und dadurch vorteilhaft durch eine gleiche Struktur bzw. Hardware überwacht werden.

Ist eine Überwachungseinheit vorgesehen, die dazu dient, den ersten Überwachungsmodus zumindest teilweise im Zusammenwirken mit den Überwachungsvorrichtungen der Bremsüberwachungseinrichtung durchzuführen, können die Überwachungsvorrichtungen und die Überwachungseinheit jeweils dazu vorgesehen sein, bei der Ausführung der ersten Überwachungsfunktion abhängig von der ersten Bremswirkungskenngröße ein Fehlersignal auszugeben, wobei die erste Bremswirkungsüberwachungseinheit eine Auslöseeinheit zur Betätigung der Schalteinheit aufweist, die mit den Überwachungsvorrichtungen, der Überwachungseinheit und der Schalteinheit derart in Wirkverbindung steht, dass die Betätigung das Vorliegen von zumindest zwei Fehlersignalen voraussetzt.

Gemäß einer weiteren Ausgestaltung der Erfindung weist die Schienenfahrzeugbremsvorrichtung eine weitere Bremseinrichtung und eine Schaltvorrichtung auf, wobei abhängig von der Bremswirkungskenngröße als Rückfallmaßnahme diese weitere Bremseinrichtung mittels der Schaltvorrichtung betätigt wird. Hierdurch kann bei einem fehlerhaften Betrieb der Bremsregelungseinheit eine zusätzliche Bremswirkung mittels der weiteren Bremseinrichtung bereitgestellt werden.

In einer konstruktiv einfachen Ausführung wird vorgeschlagen, dass diese Bremseinrichtung als Feststellbremse ausgebildet ist.

Es ist außerdem möglich, alternative Bremsen als Ausprägung der weiteren Bremseinrichtung vorzusehen, die insbesondere eine höhere Leistung aufweisen als eine Feststellbremse. So können beispielsweise zur Bereitstellung einer ausreichenden Bremswirkung Bremsen eingesetzt werden, die vom generatorischen Prinzip einer elektrodynamischen Bremse abweichen und über Druckerhöhung in pneumatischen oder hydraulischen Bremszylindern ihre Bremswirkung entfalten. Außerdem kann als weitere Bremseinrichtung eine Magnetschienenbremse eingesetzt werden, welche durch pneumatisches, hydraulisches und/oder mechanisches Betätigen eines Aktuators in Verbindung mit einem durch einen Strom erzeugten magnetischen oder permanentmagnetischen Feld betrieben wird. Des Weiteren ist ein auf dem Prinzip des Wirbelstroms basierendes Bremssystem möglich. Ein Zuschalten oder Erhöhen von Bremswirkungen mittels zumindest einer weiteren Bremseinrichtung kann solange erfolgen, bis sämtliche verfügbare Bremsen vollständig zugeschaltet sind.

Es wird ferner vorgeschlagen, dass die Schaltvorrichtung während der Ausführung der zweiten Überwachungsfunktion durch die zweite Bremswirkungsüberwachungseinheit betätigbar ist. Hierdurch können eine vorteilhafte Überwachung der zweiten Bremssteuereinheit der zu überwachenden Bremsregelungseinheit sowie eine weitere Rückfallmaßnahme zusätzlich zur Ausführung des zweiten Bremsmodus erreicht werden.

Ist eine Überwachungseinheit vorgesehen, die dazu dient, den ersten Überwachungsmodus zumindest teilweise im Zusammenwirken mit den Überwachungsvorrichtungen der Bremsüberwachungseinrichtung durchzuführen, können die Überwachungsvorrichtungen und die Überwachungseinheit jeweils dazu vorgesehen sein, bei der Ausführung der zweiten Überwachungsfunktion abhängig von der ersten Bremswirkungskenngröße ein Fehlersignal auszugeben, wobei die zweite Bremswirkungsüberwachungseinheit eine Auslöseeinheit zur Betätigung der Schaltvorrichtung aufweist, die mit den Überwachungsvorrichtungen, der Überwachungseinheit und der Schaltvorrichtung derart in Wirkverbindung steht, dass die Betätigung das Vorliegen von zumindest zwei Fehlersignalen voraussetzt.

In einer weiteren vorteilhaften Ausführung der Erfindung wird vorgeschlagen, dass die Schienenfahrzeugbremsvorrichtung zumindest eine zweite elektrodynamische Bremse umfasst, die eine Antriebseinheit, welche zumindest einen Antriebsmotor und eine Leistungsversorgungseinheit zum Versorgen des Antriebsmotors in einem Traktionsmodus der Antriebseinheit aufweist, und zumindest eine Bremsregelungseinheit umfasst, welche die jeweilige Leistungsversorgungseinheit und zumindest eine Bremssteuereinheit aufweist, die in einem ersten Bremsmodus die jeweilige Leistungsversorgungseinheit zur Bereitstellung einer Bremswirkung steuert.

In diesem Zusammenhang wird vorgeschlagen, dass die Schienenfahrzeugbremsvorrichtung zumindest eine Sensoreinheit, die dazu vorgesehen ist, zumindest eine Bremswirkungskenngröße für den ersten Bremsmodus der zweiten Bremse zu erfassen, und zumindest eine der zweiten Bremse zugeordnete, von der Bremsregelungseinheit der zweiten Bremse unabhängige zweite Bremsüberwachungseinrichtung aufweist, die dazu vorgesehen ist, in einem zweiten Überwachungsmodus diese Bremswirkungskenngröße für die Einleitung einer Rückfallmaßnahme betreffend die zweite Bremse zu berücksichtigen. Hierdurch kann ein vorteilhaftes Differenzierungsvermögen bei der Fehlererkennung und Fehlerbehandlung in Bezug auf zwei unterschiedliche elektrodynamische Bremsen erreicht werden.

Die Sensoreinheit zur Erfassung der Bremswirkungskenngröße für die erste Bremse und die Sensoreinheit zur Erfassung der Bremswirkungskenngröße für die zweite Bremse können von getrennten Strukturen oder zumindest teilweise von der gleichen Struktur bzw. der gleichen Hardware gebildet sein.

Außerdem wird vorgeschlagen, dass die Schienenfahrzeugbremsvorrichtung eine Überwachungseinheit aufweist, die gemeinsamer Bestandteil der ersten Bremsüberwachungseinrichtung und der zweiten Bremsüberwachungseinrichtung ist. Die Struktur bzw. die Hardware der Überwachungseinheit wird zweckmäßigerweise in Kombination mit den verschiedenen Bremsüberwachungseinrichtungen für unterschiedliche elektrodynamische Bremsen genutzt, wodurch Bauraum und Bauteile eingespart werden können.

Außerdem wird vorgeschlagen, dass die der ersten Bremse zugeordnete erste Bremsüberwachungseinrichtung zumindest von der Bremsregelungseinheit der zweiten Bremse gebildet ist. Hierdurch können der Bremsmodus der zweiten Bremse und der Überwachungsmodus der Bremsüberwachungseinrichtung für die erste Bremse mittels der gleichen physikalischen Struktur - oder anders ausgedrückt mittels der gleichen Hardware - der zweiten Bremse ausgeführt werden. Dadurch kann eine rückwirkungsfreie Überwachung der ersten Bremse erreicht werden.

Vorteilhafterweise weist die Bremsregelungseinheit der zweiten Bremse zumindest zwei Bremssteuereinheiten und eine Schalteinheit auf, die dazu vorgesehen ist, zur Durchführung der Rückfallmaßnahme zwischen dem ersten Bremsmodus der Bremsregelungseinheit, in welchem die erste Bremssteuereinheit die jeweilige Leistungsversorgungseinheit zur Bereitstellung einer Bremswirkung steuert, und einem zweiten Bremsmodus der Bremsregelungseinheit umzuschalten, in welchem die zweite Bremssteuereinheit die jeweilige Leistungsversorgungseinheit zur Bereitstellung einer Bremswirkung steuert, wobei die Überwachungsvorrichtungen der ersten Bremsüberwachungseinrichtung jeweils von einer unterschiedlichen Bremssteuereinheit der diese Bremsüberwachungseinrichtung bildenden Bremsregelungseinheit der zweiten Bremse gebildet sind.

Zweckmäßigerweise ist die der ersten Bremse zugeordnete erste Bremsüberwachungseinrichtung zumindest von der Bremsregelungseinheit der zweiten Bremse gebildet, wobei die der zweiten Bremse zugeordnete zweite Bremsüberwachungseinrichtung zumindest von der Bremsregelungseinheit der ersten Bremse gebildet ist. Hierdurch kann eine vorteilhafte gegenseitige, insbesondere überkreuzte Überwachung der elektrodynamischen Bremsen erreicht werden.

Zu den vorteilhaften Auswirkungen des vorgeschlagenen Verfahrens wird um unnötige Wiederholungen zu vermeiden auf die Ausführungen oben zur Schienenfahrzeugbremsvorrichtung verwiesen.

Es werden Ausführungsbeispiele der Erfindung anhand der Zeichnungen erläutert. Es zeigen:
- Figur 1:: ein Schienenfahrzeug mit Antriebsachsen und diesen zugeordneten Antriebseinheiten und
- Figur 2:: eine Steuerungsschaltung zum Steuern einer Antriebseinheit in einem Bremsmodus, mit zwei unterschiedlichen Bremssteuereinheiten,
- Figur 3:: die Steuerschaltung aus Figur 2 und eine weitere Steuerschaltung, die mit einer Überwachungsfunktion ausgestattet ist,
- Figur 4:: eine alternative Ausführung der Schaltungen aus Figur 3 und
- Figur 5:: eine alternative Ausführung von Steuerschaltungen mit Überwachungsfunktionen.

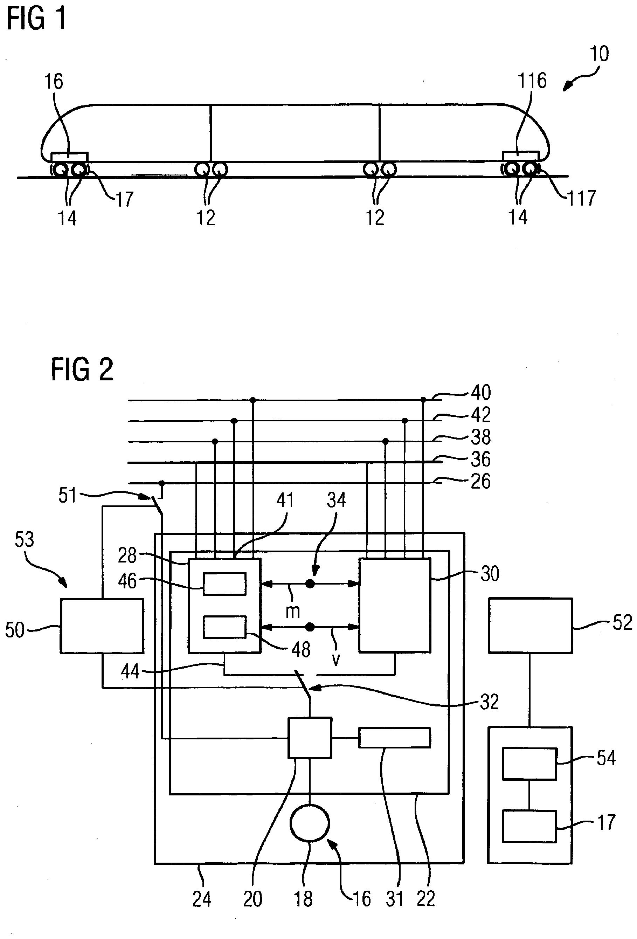

Figur 1 zeigt ein als Triebfahrzeug ausgebildetes Schienenfahrzeug 10 in einer stark schematisierten Seitenansicht. Es weist Laufachsen 12 und Antriebsachsen 14 auf, die in einem Traktionsmodus mittels Antriebseinheiten 16, 116 angetrieben werden. Ein Bremsvorgang des Schienenfahrzeugs 10 erfolgt mittels der Antriebseinheiten 16, 116, die dabei jeweils die Funktion einer elektrodynamischen Bremse haben. Für Bremsvorgänge bei geringen Geschwindigkeiten ist jeweils eine weitere Bremseinrichtung 17, 117 vorgesehen, die als eine in der Form einer Federspeicherbremse ausgeführte, in der Figur schematisch dargestellte Feststellbremse ausgebildet ist.

Die Steuerung der Antriebseinheit 16 als Bestandteil einer elektrodynamischen Bremse wird anhand der Figur 2 näher erläutert. Die Antriebseinheit 16 weist zumindest einen Antriebsmotor 18 auf, der als Drehstrommaschine ausgebildet sein kann. Zur Versorgung des Antriebsmotors 18 mit elektrischer Leistung umfasst die Antriebseinheit 16 ferner eine mit dem Antriebsmotor 18 in Wirkverbindung stehende Leistungsversorgungseinheit 20. In einer nicht gezeigten Ausführung kann die Antriebseinheit 16 mehrere Antriebsmotoren aufweisen, die von der gleichen Leistungsversorgungseinheit 20 versorgt werden. Die Leistungsversorgungseinheit 20 ist aus dem Stand der Technik bekannt und weist einen nicht näher dargestellten Wechselrichter auf, welcher in einem Traktionsmodus der Antriebseinheit 16 durch die Ansteuerung elektronischer Schaltelemente - auch "Ventile" genannt - ausgehend von einem Gleichspannungszwischenkreis einen in Spannung und Frequenz variablen Strom gemäß der zu bereitstellenden Leistung für den Antriebsmotor 18 erzeugt. Die im Gleichspannungszwischenkreis verfügbare Energie wird aus einer Hochspannungsnetzversorgung 26 bezogen, die über weitere, nicht dargestellte elektrische Wandlungseinrichtungen, wie insbesondere einen Transformator oder einen Spannungswandler, einen Gleichrichter usw. mit einer Bahnnetzversorgung in Wirkverbindung steht. Im Traktionsmodus der Antriebseinheit 16 werden die Schaltelemente des Wechselrichters gemäß einer Schaltstrategie gesteuert, um über den Antriebsmotor 18 ein Antriebsmoment auf die zugeordneten Antriebsachsen 14 zu erzeugen.

Der Antriebsmotor 18 bildet zusammen mit einer Bremsregelungseinheit 22 eine elektrodynamische Bremse 24. Die Bremsregelungseinheit 22 umfasst neben der Leistungsversorgungseinheit 20 zwei Bremssteuereinheiten 28 und 30, die jeweils dazu vorgesehen sind, in einem aktiven Zustand die Leistungsversorgungseinheit 20 für einen Bremsvorgang der elektrodynamischen Bremse 24 zu steuern. Die Bremssteuereinheiten 28, 30 sind jeweils dazu vorgesehen, in einem Bremsmodus der Antriebseinheit 16 die Schaltelemente des Wechselrichters der Leistungsversorgungseinheit 20 gemäß einer Schaltstrategie derart zu steuern, dass über den Antriebsmotor 18 ein Bremsmoment auf die zugeordnete Antriebsachse 14 ausgeübt wird. Bei einem Bremsvorgang mittels der elektrodynamischen Bremse 24 wirkt der Antriebsmotor 18 als Generator, wobei die im Bremsvorgang in elektrischen Strom umgewandelte Energie mittels eines Bremswiderstands 31 in Wärme umgewandelt wird. Alternativ oder zusätzlich kann die Energie in die Hochspannungsnetzversorgung 26 zurückgespeist, auf dem Fahrzeug verwendet oder in einen Mobilspeicher eingespeichert werden.

Die erste Bremssteuereinheit 28 steht mit der Leistungsversorgungseinheit 20 über eine Schalteinheit 32 in Wirkverbindung, deren Funktion weiter unten erläutert wird. Neben einer Schnittstelle zur Leistungsversorgungseinheit 20 weist die Bremssteuereinheit 28 weitere Schnittstellen auf, durch welche sie mit einer Sensoreinheit 34 in Wirkverbindung steht. Die Sensoreinheit 34 dient dazu, eine Geschwindigkeitskenngröße v und eine Massenkenngröße m zu erfassen, die Eingangssignale für die Erzeugung von Steuersignalen durch die Bremssteuereinheit 28 darstellen. Die Bremssteuereinheit 28 steht ferner über weitere Schnittstellen in Wirkverbindung mit der Schienenfahrzeugleittechnik, indem sie mit einem Datenbus 36 des Schienenfahrzeugs 10 verbunden ist, und mit der Schienenfahrzeughauptluftleitung 38. Über diese weiteren Schnittstellen können weitere Eingangsparameter für die Bremssteuereinheit 28 zur Verfügung gestellt werden, wie insbesondere eine Kenngröße, die im Falle einer Betriebsbremsung eine durch den Fahrzeugführer oder durch eine automatische Fahrzeugssteuerung eingestellte Bremswirkung darstellt. Die Bremssteuereinheit 28 ist über eine Bordnetzversorgung 40 mit elektrischer Energie versorgt und steht ferner über eine Schnittstelle 41 mit einer Fahrzeugsnotbremseleitung 42 in Wirkverbindung, über welche eine Notbremsung des Schienenfahrzeugs 10 eingeleitet werden kann.

Auf der Basis der oben genannten Eingangsparameter erzeugt die Bremssteuereinheit 28 in einem ersten Bremsmodus, in welchem sie sich in einem aktiven Zustand befindet, Steuersignale 44, die die Leistungsversorgungseinheit 20 entsprechend einer bestimmten, zu erzielenden Bremswirkung, insbesondere entsprechend einem bestimmten, zu erzielenden Bremsmoment steuert. Hierzu weist die Betriebssteuereinheit 28 zumindest eine Recheneinheit 46 und eine Speichereinheit 48 auf, in welcher eine Software gespeichert ist. In dieser Software ist insbesondere die Bremsmodusschaltstrategie für die Schaltelemente des Wechselrichters programmiert.

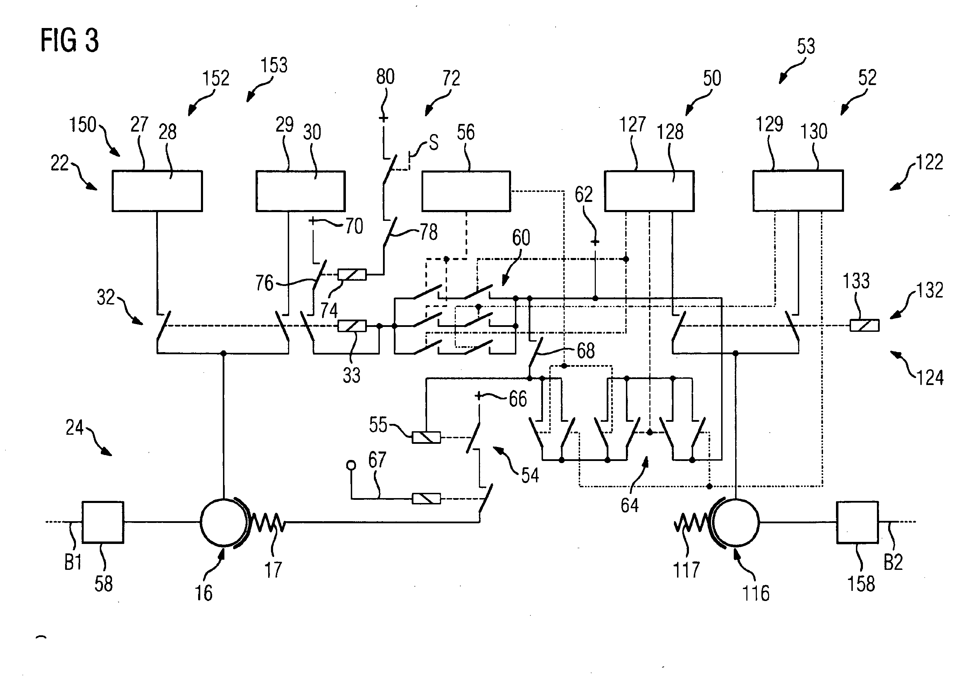

Der Bremssteuereinheit 28 ist eine erste Bremswirkungsüberwachungseinheit 50 einer ersten Bremsüberwachungseinrichtung 53 zugeordnet, die dazu vorgesehen ist, die mittels der elektrodynamischen Bremse 24 erzielte oder erzielbare Bremswirkung zu überwachen. Hierzu wird eine Bremswirkungskenngröße, insbesondere eine Bremsmomentkenngröße herangezogen und mit einem Sollwert verglichen. Die Bremswirkungskenngröße kann z.B. mittels eines Beschleunigungssensors erfasst werden und/oder mittels einer Auswertung der Geschwindigkeitskenngröße v ermittelt werden. Alternativ oder zusätzlich kann die Bremswirkungskenngröße mittels einer Überwachung der durch die Bremssteuereinheit 28 erzeugten Steuersignale 44 ermittelt werden. Eine beispielhafte Erfassung der Bremswirkungskenngröße, die mit dem Bezugszeichen B1 bezeichnet ist, ist in Figur 3 durch eine Sensoreinheit 58 bzw. 158 schematisch dargestellt.

Die Bremsregelungseinheit 22 umfasst - wie oben bereits erwähnt - eine zweite Bremssteuereinheit 30. Diese ist dazu vorgesehen, zumindest die oben, für die erste Bremssteuereinheit 28 beschriebene Steuerungsfunktion zum Steuern der Leistungsversorgungseinheit 20 in einem zweiten Bremsmodus der Antriebseinheit 16 auszuführen. Sie dient insbesondere dazu, die Steuerung der Leistungsversorgungseinheit 20 bei einem fehlerhaften Betrieb der ersten Bremssteuereinheit 28 zu übernehmen.

Wird mittels der ersten Bremswirkungsüberwachungseinheit 50 erkannt, dass die durch die elektrodynamische Bremse 24 erzeugte bzw. erzielbare Bremswirkung nicht ausreicht, wird die Bremssteuereinheit 28 als fehlerhaft betrachtet und es wird als Rückfallmaßnahme mittels der Schalteinheit 32 in einen zweiten Bremsmodus der elektrodynamischen Bremse 24 umgeschaltet, in welchem die zweite Bremssteuereinheit 30 in ihrem aktiven Zustand die Leistungsversorgungseinheit 20 zur Bereitstellung einer Bremswirkung steuert. In diesem zweiten Bremsmodus wird die erste, fehlerhafte Bremssteuereinheit 28 in einen inaktiven Zustand geschaltet.

Um ein Antreiben während des Betriebs der zweiten Bremssteuereinheit 30 im zweiten Bremsmodus zu verhindern ist vorteilhaft, wenn mit der Umschaltung durch die Schalteinheit 32 auch eine Trennung von der Hochspannungsnetzversorgung 26 stattfindet. Dies erfolgt mittels eines Netztrennschalters 51.

Der zweiten Bremssteuereinheit 30 ist eine zweite Bremswirkungsüberwachungseinheit 52 der Bremsüberwachungseinrichtung 53 zugeordnet. Die Bremswirkungsüberwachungseinheiten 50, 52 können von physikalisch voneinander getrennten Einheiten gebildet sein oder sie können zumindest teilweise von einer gemeinsamen Struktur gebildet sein. Insbesondere können die Bremswirkungsüberwachungseinheiten 50, 52 vollständig durch die gleiche Struktur gebildet sein. Die zweite Bremswirkungsüberwachungseinheit 52 ist dazu vorgesehen, die mittels der elektrodynamischen Bremse 24 in deren zweitem Bremsmodus mit der zweiten Bremssteuereinheit 30 erzielte bzw. erzielbare Bremswirkung zu überwachen. Hierzu wird - wie oben bereits beschrieben - eine Bremswirkungskenngröße, insbesondere eine Bremsmomentkenngröße, erfasst bzw. ermittelt und mit einem Sollwert verglichen. Diese Bremswirkungskenngröße kann insbesondere der Bremswirkungskenngröße B1 entsprechen.

Wird mittels der zweiten Bremswirkungsüberwachungseinheit 52 erkannt, dass die durch die elektrodynamischen Bremse 24 erzeugte bzw. erzielbare Bremswirkung nicht ausreicht, wird die Bremssteuereinheit 30 als fehlerhaft betrachtet und es wird als Rückfallmaßnahme mittels einer durch die zweite Bremswirkungsüberwachungseinheit 52 gesteuerten Schaltvorrichtung 54 die weitere Bremseinrichtung 17 getätigt.

Die Bremssteuereinheiten 28, 30 basieren auf unterschiedlichen Technologien. Unter einer Technologie wird die konstruktive - oder hardwaretechnische - und/oder die algorithmische - oder softwaretechnische - Ausführung erfasst. In einer beispielhaften Konfiguration kann die erste Bremssteuereinheit 28 in der Form eines Signalprozessors (auch "SIP" genannt) ausgebildet sein, wobei die algorithmische Implementierung einer feldorientierten Regelung entsprechen kann. Die zweite Bremssteuereinheit 30 kann als Field Programmable Gate Array (FPGA) oder "im Feld programmierbare Gatter-Anordnung" ausgebildet sein, wobei die algorithmische Implementierung einer schaltorientierten Regelung entsprechen kann.

Gemäß einer alternativen Ausführung ist die zweite Bremssteuereinheit 30 derart ausgeführt, dass die Ansteuerung der Leistungsversorgungseinheit 20 ausschließlich durch eine mittels Hardware realisierte Funktionalität - ohne Softwareeinsatz - erfolgt, während die erste Bremssteuereinheit 28 auf einer hardwaretechnischen und softwaretechnischen Implementierung der Steuerfunktionen basiert.

Basieren beide Bremssteuereinheiten 28, 30 auf einer softwaretechnischen Umsetzung im Hinblick auf zumindest eine Steuerfunktion, sind die entsprechenden Softwares in den Bremssteuereinheiten 28, 30 unterschiedlich implementiert. Hierbei unterscheiden sich insbesondere die zum Ausführen der Steuerfunktion vorgesehenen Programmiercodes, indem die Codes z.B. durch verschiedene Personen und/oder verschiedenen Werkzeuge erstellt werden.

Durch die unterschiedlichen Ausführungen der Bremssteuereinheiten 28, 30 werden die Schaltelemente des Wechselrichters der Leistungsversorgungseinheit 20 von der ersten Bremssteuereinheit 28 gemäß einer ersten Schaltstrategie und von der zweiten Bremssteuereinheit 30 gemäß einer zweiten, von der ersten Schaltstrategie unterschiedlichen Schaltstrategie gesteuert.

Damit das Umschalten von einer Bremssteuereinheit zur anderen zuverlässig erfolgt, wird die der Antriebseinheit 16 zugeordnete Schalteinheit 32 in regelmäßigen und ausreichend kurzen zeitlichen Abständen auf ihre Funktionalität hin untersucht. Beispielsweise wird bei Stillstand des Schienenfahrzeugs 10, z.B. während des Aufrüstens oder der Bremsprobe, die Ansteuerung der Schaltelemente der Wechselrichter nach einem bestimmten Testmuster durch eine der Bremssteuereinheiten 28, 30 erzeugt. Es ist hierzu zumindest eine Sensoreinheit vorgesehen, die beispielweise einen Phasenstromwandler und/oder einen Zwischenkreisspannungswandler aufweist und welche eine Auswirkung der Ansteuerung erfasst. Nach Durchführung des Tests mit der ersten Bremssteuereinheit 28 wird mittels der Schalteinheit 32 die zweite Bremssteuereinheit 30 in ihren aktiven Zustand geschaltet und der Test wird - vorzugsweise mit einem anderen Testmuster - wiederholt. Wenn eine zu erwartende Umsetzung des jeweiligen Testmusters erkannt wird, gilt die Schalteinheit 32 als fehlerfrei.

Die obige Beschreibung findet auch in Bezug auf die Antriebseinheit 116 Anwendung, welche Bestandteil einer zweiten elektrodynamischen Bremse 124 des Schienenfahrzeugs 10 ist. Die Leistungsversorgungseinheit der Antriebseinheit 116 bildet mit Bremssteuereinheiten 128, 130 eine Bremsregelungseinheit 122, wie in Figur 3 dargestellt. Die Bremsregelungseinheiten 22, 122 des Schienenfahrzeugs 10, jeweils mit ihren Bremssteuereinheiten und ihrer Leistungsversorgungseinheit, sind dahingehend ausgelegt, dass sie im Zusammenwirken eine Notbremsung mittels der ihnen zugeordneten Antriebsmotoren 18 an den Antriebsachsen 14 des Schienenfahrzeugs 10 bewirken können. Anders formuliert sind die Bremsregelungseinheiten 22, 122 dazu ausgelegt, im Zusammenwirken ein für die Durchführung einer Notbremsung notwendiges Bremsmoment mindestens an den Antriebsachsen 14 zu erzeugen.

Eine beispielhafte Implementierung der Bremsüberwachungseinrichtung 53 mit deren Bremswirkungsüberwachungseinheiten 50, 52 wird nun anhand der Figur 3 beschrieben.

Figur 3 zeigt auf der linken Seite die Antriebseinheit 16, welche wie oben beschrieben zumindest den Antriebsmotor 18 und die Leistungsversorgungseinheit 20 umfasst (siehe Figur 2). Es sind außerdem die Bremssteuereinheiten 28, 30 dargestellt, welche zusammen mit der Leistungsversorgungseinheit 20 die Bremsregelungseinheit 22 bilden. Die Bremsregelungseinheit 22 bildet zusammen mit dem Antriebsmotor 18 die elektrodynamische Bremse 24, die im Folgenden als "erste elektrodynamische Bremse 24" bezeichnet wird.

Die Bremsregelungseinheit 22 weist die Schalteinheit 32 auf, welche zur Durchführung einer Rückfallmaßnahme der ersten Bremse 24 dazu vorgesehen ist, zwischen dem ersten Bremsmodus der Bremsregelungseinheit 22, in welchem die erste Bremssteuereinheit 28 die Leistungsversorgungseinheit 20 zur Bereitstellung einer Bremswirkung steuert, und einem zweiten Bremsmodus der Bremsregelungseinheit 22 umzuschalten, in welchem die zweite Bremssteuereinheit 30 die Leistungsversorgungseinheit 20 zur Bereitstellung einer Bremswirkung steuert. In Figur 3 ist ein Aktuator 33 zur Betätigung der Schalteinheit 32 dargestellt.

Das Schienenfahrzeug 10 weist, wie auch in Figur 1 dargestellt, die weitere Antriebseinheit 116 auf. Die Antriebseinheit 116, die wie die Antriebseinheit 16 zumindest einen Antriebsmotor und eine Leistungsversorgungseinheit umfasst, ist Bestandteil einer elektrodynamischen Bremse 124, die weitestgehend, insbesondere vollständig identisch zur elektrodynamischen Bremse 24 ausgebildet ist. Es wird daher, um unnötige Wiederholungen zu vermeiden auf die Beschreibung oben zur elektrodynamischen Bremse 24 verwiesen.

Die elektrodynamische Bremse 124, die unten als "zweite elektrodynamische Bremse 124" bezeichnet wird, weist den Antriebsmotor der Antriebseinheit 116 und eine Bremsregelungseinheit 122 auf. Diese umfasst die Leistungsversorgungseinheit der Antriebseinheit 116 und zwei Bremssteuereinheiten 128, 130, die jeweils dazu vorgesehen sind, in einem aktiven Zustand diese Leistungsversorgungseinheit für einen Bremsvorgang der elektrodynamischen Bremse 124 zu steuern. Die Bremsregelungseinheit 122 weist eine Schalteinheit 132 mit Aktuator 133 auf, die die gleiche Funktion wie die Schalteinheit 32 in der ersten elektrodynamischen Bremse 24 hat: Sie ist dazu vorgesehen, zur Durchführung der jeweiligen Rückfallmaßnahme zwischen dem ersten Bremsmodus der Bremsregelungseinheit 122, in welchem die erste Bremssteuereinheit 128 die Leistungsversorgungseinheit der Antriebseinheit 116 zur Bereitstellung einer Bremswirkung steuert, und einem zweiten Bremsmodus der Bremsregelungseinheit 122 umzuschalten, in welchem die zweite Bremssteuereinheit 130 diese Leistungsversorgungseinheit zur Bereitstellung einer Bremswirkung steuert.

Außerdem sind die mechanische Bremseinrichtung 17, welche der ersten elektrodynamischen Bremse 24 zugeordnet ist, und die weitere, der zweiten elektrodynamischen Bremse 124 zugeordnete mechanische Bremseinrichtung 117 dargestellt.

Die oben, anhand der Figur 2 beschriebene Überwachung der ersten elektrodynamischen Bremse 24 erfolgt im betrachteten Ausführungsbeispiel zumindest mittels der Bremsregelungseinheit 122 der zweiten elektrodynamischen Bremse 124. Hiermit ist die der ersten Bremse 24 zugeordnete Bremsüberwachungseinrichtung 53 zumindest von der Bremsregelungseinheit 122 der zweiten Bremse 124 gebildet.

Die in Figur 2 dargestellte Bremsüberwachungseinrichtung 53 ist von den Bremssteuereinheiten 128, 130 der Bremsregelungseinheit 122 der zweiten Bremse 124 sowie von einer weiteren, von diesen getrennten Überwachungseinheit 56 gebildet.

Die Bremsüberwachungseinrichtung 53 ist mit einer ersten Überwachungsfunktion ausgestattet, insbesondere programmiert, bei welcher diese Bremsüberwachungseinrichtung 53 - neben den oben beschriebenen Steueraufgaben der Bremssteuereinheiten 128, 130 zur Steuerung der Leistungsversorgungseinheit der Antriebseinheit 116 - als erste Bremswirkungsüberwachungseinheit 50 ausgebildet ist, die dazu vorgesehen ist, die erste Bremse 24 in deren erstem Bremsmodus zu überwachen.

Diese Überwachungsfunktion basiert auf einer im Folgenden beschriebenen Überwachungsaufgabe, die von jeder der Bremssteuereinheiten 128, 130 und der Überwachungseinheit 56 parallel und weitestgehend, insbesondere vollständig unabhängig erledigt wird. Diese Einheiten stehen jeweils in Wirkverbindung mit einer Sensoreinheit 58, die zur Erfassung bzw. Bestimmung einer ersten Bremswirkungskenngröße B1 für den ersten Bremsmodus der ersten elektrodynamischen Bremse 24 vorgesehen ist.

Die Bremswirkungskenngröße B1 kann insbesondere eine Bremsmomentkenngröße sein, wobei die Sensoreinheit 58 z.B. mit einer vom Antriebsmotor 18 antreibbaren Achse 14 mechanisch gekoppelt und beispielsweise als Drehmomentsensor ausgebildet sein kann. Die Sensoreinheit 58 ist schematisch dargestellt und kann aus einem oder mehreren Sensoren bestehen, wobei die Sensoreinheit 58 die Bremswirkungskenngröße B1 aus einer bzw. mehreren gemessenen Größen bereitstellt.

In einer weiteren Ausführung können durch die Sensoreinheit 58 mehrere Bremswirkungskenngrößen erfasst werden, die sich in ihrer Art voneinander unterscheiden und jeweils durch eine unterschiedliche Einheit der Bremsüberwachungseinrichtung 53 ausgewertet werden, wie unten näher beschrieben.

Wie oben bereits beschrieben basieren die Bremssteuereinheiten 28, 30 der ersten Bremse 24 auf unterschiedlichen Technologien. Dies gilt entsprechend für die Bremssteuereinheiten 128, 130. Unter einer Technologie wird die konstruktive - oder hardwaretechnische - und/oder die algorithmische - oder softwaretechnische - Ausführung erfasst. In einer beispielhaften Konfiguration kann die erste Bremssteuereinheit 128 in der Form eines Signalprozessors (auch "SIP" genannt) ausgebildet sein, wobei die algorithmische Implementierung einer feldorientierten Regelung entspricht. Die zweite Bremssteuereinheit 130 kann als Field Programmable Gate Array (FPGA) oder "im Feld programmierbare Gatter-Anordnung" ausgebildet sein, wobei die algorithmische Implementierung einer schaltorientierten Regelung entspricht.

Gemäß einer alternativen Ausführung ist die zweite Bremssteuereinheit 130 derart ausgeführt, dass die Ansteuerung der Leistungsversorgungseinheit der Antriebseinheit 116 ausschließlich durch eine mittels Hardware realisierte Funktionalität - ohne Softwareeinsatz - erfolgt, während die erste Bremssteuereinheit 128 auf einer hardwaretechnischen und softwaretechnischen Implementierung der Steuerfunktionen basiert.

Basieren beide Bremssteuereinheiten 128, 130 auf einer softwaretechnischen Umsetzung im Hinblick auf zumindest eine Steuerfunktion, ist die entsprechende Software in den Bremssteuereinheiten 128, 130 unterschiedlich implementiert. Hierbei unterscheiden sich insbesondere die zum Ausführen der Steuerfunktion vorgesehenen Programmiercodes, indem die Codes z.B. durch verschiedene Personen und/oder verschiedenen Werkzeuge erstellt werden.

Aufgrund dieser Unterschiede, welche für die Steuerfunktion der Bremssteuereinheiten im jeweiligen Bremsmodus gelten, kann jede der Bremssteuereinheiten 128, 130 die Bremswirkung der ersten Bremse 24 in deren erstem Bremsmodus jeweils nach einer individuellen Methode überwachen, die sich von den Methoden der anderen Bremssteuereinheit unterscheidet. Die Bremssteuereinheiten 128, 130 der Bremsregelungseinheit 122 der zweiten Bremse 124 entsprechen demnach bei der Ausführung von Überwachungsfunktionen zwei Überwachungsvorrichtungen 127, 129 der Bremsüberwachungseinrichtung 53, die sich durch die oben beschriebenen Merkmale voneinander unterscheiden. Insbesondere unterscheiden sie sich bezüglich ihrer konstruktiven und/oder algorithmischen Ausführung voneinander. Wenn sie jeweils eine Software für die Ausführung von Überwachungsfunktionen aufweist, sind diese Software unterschiedlich implementiert.

Die Überwachungseinheit 56 basiert auf einer Technologie, die sich von den Technologien der Bremssteuereinheiten 128, 130 bzw. der Überwachungsvorrichtungen 127, 129 unterscheidet. Beispielsweise kann die Überwachungseinheit 56 auf der CPLD-Technologie basieren ("Complex Programmable Logic Device"). Die Überwachung der durch die erste Bremse 24 erzeugten Bremswirkung kann demnach gemäß einer Methode erfolgen, die sich von den Methoden der Bremssteuereinheiten 128, 130 bzw. Überwachungsvorrichtungen 127, 129 unterscheidet.

Die von jeder Bremssteuereinheit 128, 130 und von der Überwachungseinheit 56 zu erledigende Überwachungsaufgabe besteht darin, auf der Grundlage der Bremswirkungskenngröße B1 zu bestimmen, ob die durch die erste Bremse 24 in deren erstem Bremsmodus erzeugte Bremswirkung ausreichend ist. Aufgrund der unterschiedlichen Technologien ist im betrachteten Ausführungsbeispiel der Überwachungsmechanismus, mit welchem die Bremssteuereinheiten 128, 130 und die Überwachungseinheit 56 zur Ausführung der ersten Überwachungsfunktion ausgestattet sind, jeweils auf eine andere Art realisiert bzw. bei jeder dieser Einheiten unterschiedlich. Insbesondere können die unterschiedlichen Überwachungsmechanismen durch unterschiedliche Überwachungssoftware realisiert sein. Die Überwachungsaufgabe wird daher jeweils mittels einer unterschiedlichen Methode d.h. mittels einer unterschiedlichen Implementierung der Aufgabe durch diese Einheiten weitestgehend getrennt, insbesondere vollständig getrennt erledigt.

Wie oben bereits erwähnt können in einer besonderen Ausführung durch die Sensoreinheit 58 mehrere Bremswirkungskenngrößen erfasst werden, die sich in ihrer Art voneinander unterscheiden und jeweils durch eine unterschiedliche Einheit der Bremsüberwachungseinrichtung 53 ausgewertet wird. Die Art der Bewegungskenngrößen wird hierbei durch die Technologie der jeweiligen Einheit der Bremsüberwachungseinrichtung 53 bestimmt.

Die Bremssteuereinheiten 128, 130 der zweiten Bremse 124, d.h. die Überwachungsvorrichtungen 127, 129 und die Überwachungseinheit 56 sind jeweils dazu vorgesehen, bei der Erledigung dieser Überwachungsaufgabe abhängig von der ersten Bremswirkungskenngröße B1 bzw. von der jeweiligen Bremswirkungskenngröße ein Fehlersignal auszugeben. Dieses wird von jeder dieser Einheiten ausgegeben, wenn die Auswertung der Bremswirkungskenngröße B1 bzw. der jeweiligen Bremswirkungskenngröße durch die jeweilige Einheit zum Ergebnis führt, dass eine unzureichende Bremswirkung der ersten Bremse 24 in deren erstem Bremsmodus als erkannt gilt. Aufgrund der unterschiedlichen Implementierung der Überwachungsaufgabe in jeder der genannten Einheiten kann eine weitestgehend unabhängige, insbesondere vollständig unabhängige Ausgabe eines Fehlersignals durch die Einheiten der Bremsüberwachungseinrichtung 53 erfolgen.

Die Betätigung der Schalteinheit 32 wie oben beschrieben erfolgt nur dann, wenn zumindest zwei Fehlersignale ausgegeben werden. Hierzu dient eine Auslöseeinheit 60, welche als Bestandteil der ersten Bremsüberwachungseinrichtung 53 mit einem Ausgang der Bremssteuereinheiten 128, 130 (oder Überwachungsvorrichtungen 127, 129) und der Überwachungseinheit 56 einerseits und mit der Schalteinheit 32, insbesondere mit dem Aktuator 33 andererseits in Wirkverbindung steht. Die Auslöseeinheit 60 (auch "Voter"-Vorrichtung genannt) weist drei zueinander parallel geschaltete Leitungen auf, die mit einer gemeinsamen Spannungsquelle 62 und gemeinsam mit dem Aktuator 33 elektrisch verbindbar sind. In jeder Leitung sind jeweils zwei Schalter angeordnet, wobei sich die Schalter während der Erledigung der Überwachungsaufgabe durch die Bremssteuereinheiten 128, 130 und die Überwachungseinheit 56 - und demnach im ersten Bremsmodus der ersten Bremse 24 - in einer geöffneten Stellung befinden. Hierdurch ist eine elektrische Verbindung zwischen der Spannungsquelle 62 und dem Aktuator 33 getrennt. Diese elektrische Verbindung kann durch Schließen beider Schalter in zumindest einer Leitung hergestellt werden, wodurch die Schalteinheit 32 betätigt wird. Die Schalter werden jeweils mittels eines Fehlersignals geschlossen, welches am Ausgang einer Einheit der Bremsüberwachungseinrichtung 53 vorliegt. In jeder Leitung stehen die Schalter jeweils in Wirkverbindung mit einer unterschiedlichen Einheit dieser, sodass ein Schließen beider Schalter in dieser Leitung und daher die Betätigung der Schalteinheit 32 nur dann erfolgen, wenn ein Fehlersignal von zwei unterschiedlichen Einheiten der Bremsüberwachungseinrichtung 53 ausgegeben wird.

Die Überwachungsaufgabe, nämlich die individuelle Auswertung der Bremswirkungskenngröße B1 bzw. der jeweiligen Bremswirkungskenngröße durch die Bremssteuereinheiten 128, 130 und die Überwachungseinheit 56 wird wie oben beschrieben von diesen Einheiten weitestgehend unabhängig voneinander erledigt. Die Überwachungsfunktion umfasst diese Überwachungsaufgabe und wird mit der Betätigung der Schalteinheit 32 durch ein Zusammenwirken der Einheiten der Bremsüberwachungseinrichtung 53, d.h. der Überwachungsvorrichtungen 127, 129 und der Überwachungseinheit 56, insbesondere durch eine Kombination der Ergebnisse der individuellen Überwachungsaufgaben, erledigt.

Mit der Betätigung der Schalteinheit 32 wird bei unzureichender Bremswirkung der ersten elektrodynamischen Bremse 24 in deren erstem Bremsmodus eine Rückfallmaßnahme eingeleitet, die der weiter oben beschriebenen Übernahme der Steuerung der Leistungsversorgungseinheit 20 durch die zweite Bremssteuereinheit 30 entspricht.

Die Bremsüberwachungseinrichtung 53 ist mit einer zweiten Überwachungsfunktion ausgestattet, insbesondere programmiert, bei welcher sie - neben den oben beschriebenen Steueraufgaben der Bremssteuereinheiten 128, 130 zur Steuerung der Leistungsversorgungseinheit der Antriebseinheit 116 - als zweite Bremswirkungsüberwachungseinheit 52 ausgebildet ist (siehe Figur 2), die dazu vorgesehen ist, die erste Bremse 24 in deren zweitem Bremsmodus zu überwachen.

Diese zweite Überwachungsfunktion basiert auf einer Überwachungsaufgabe, die von jeder der Bremssteuereinheiten 128, 130 und der Überwachungseinheit 56 weitestgehend getrennt erledigt wird und identisch zur Überwachungsaufgabe der ersten Überwachungsfunktion ist. Die zweite Überwachungsfunktion unterscheidet sich von der ersten Überwachungsfunktion durch den Einsatz einer weiteren Auslöseeinheit 64, welche als Bestandteil der Bremsüberwachungseinrichtung 53 mit einem Ausgang der Bremssteuereinheiten 128, 130 bzw. der Überwachungseinheit 56 einerseits und mit der Schaltvorrichtung 54 (siehe auch Figur 2), insbesondere mit deren Aktuator 55 in Wirkverbindung steht. Die Auslöseeinheit 64 (auch "Voter"-Vorrichtung genannt) weist drei in Reihe geschaltete Paare von parallelen Leitungen auf, die mit der gemeinsamen Spannungsquelle 62 und gemeinsam mit dem Aktuator 55 elektrisch verbindbar sind. Für jedes Leitungspaar ist in beiden Leitungen jeweils ein Schalter angeordnet, wobei sich die Schalter während der Erledigung der Überwachungsaufgabe durch die Bremssteuereinheiten 128, 130 und die Überwachungseinheit 56 - und demnach während des zweiten Bremsmodus der ersten Bremse 24 - in einer geschlossenen Stellung befinden. Hierdurch ist eine elektrische Verbindung zwischen der Spannungsquelle 62 und dem Aktuator 55 hergestellt. Diese elektrische Verbindung kann durch Öffnung beider Schalter in zumindest einem Leitungspaar unterbrochen werden, wodurch die Schalteinheit 54 betätigt wird.

Die Schalter werden jeweils mittels eines Fehlersignals geöffnet, welches am Ausgang einer Einheit der Bremsüberwachungseinrichtung 53 vorliegt. In jedem Leitungspaar stehen die Schalter jeweils in Wirkverbindung mit einer unterschiedlichen Einheit dieser, sodass ein Öffnung beider Schalter in diesem Leitungspaar und daher die Betätigung der Schaltvorrichtung 54 nur dann erfolgen, wenn ein Fehlersignal von zwei unterschiedlichen Einheiten der Bremsüberwachungseinrichtung 53 ausgegeben wird.

Während des zweiten Bremsmodus der ersten Bremse 24 befindet sich die Schalteinheit 54 in einer geschlossenen Stellung, wodurch eine elektrische Verbindung zwischen einer Spannungsquelle 66 und der Bremseinrichtung 17 hergestellt ist. Hierbei ist ein Signal "Lösen der Bremseinrichtung 17" gesetzt. Wird die Schalteinheit 54 betätigt, wird diese elektrische Verbindung getrennt, wodurch ein Signal "Anlegen der Bremseinrichtung 17" erzeugt wird.

In der Figur ist außerdem eine Steuerleitung 67 dargestellt, durch welche die Bremseinrichtung 17 jederzeit mittels eines Befehls des Fahrzeugsführers betätigt werden kann.

Die Überwachungsaufgabe, nämlich die individuelle Auswertung der Bremswirkungskenngröße B1 bzw. der jeweiligen Bremswirkungskenngröße durch die Bremssteuereinheiten 128, 130 sowie von der Überwachungseinheit 56 wird wie oben beschrieben von diesen Einheiten weitestgehend unabhängig voneinander erledigt. Die Überwachungsfunktion umfasst diese Überwachungsaufgabe und wird mit der Betätigung der Schalteinheit 54 durch ein Zusammenwirken dieser Einheiten, insbesondere durch eine Kombination der Ergebnisse der individuellen Überwachungsaufgaben, erledigt.

Mit der Betätigung der Schaltvorrichtung 54 wird bei unzureichender Bremswirkung der ersten elektrodynamischen Bremse 24 in deren zweitem Bremsmodus eine Rückfallmaßnahme eingeleitet, die der weiter oben beschriebenen Betätigung der mechanischen Bremse 17 entspricht. Der zweite Bremsmodus soll weiterhin wirken, bis der Bremsvorgang zu Ende ist.

Bei der Ausführung des ersten Bremsmodus, bei welchem die erste Überwachungsfunktion mittels der Auslöseeinheit 60 erledigt werden kann, ist die für die zweite Überwachungsfunktion vorgesehene Auslöseeinheit 64 inaktiv, indem eine permanente, von der Konfiguration der Auslöseeinheit 64 unabhängige elektrische Verbindung zwischen der Spannungsquelle 62 und dem Aktuator 55 hergestellt ist. Diese elektrische Verbindung wird beim Übergang in den zweiten Bremsmodus durch einen Schalter 68 unterbrochen, welcher bei der Betätigung der Schalteinheit 32 durch den Aktuator 33 geöffnet wird. Die elektrische Verbindung bleibt dann nur noch über die Auslöseeinheit 64 bestehen, die daher in einen aktiven Zustand versetzt wird.

Bei der Ausführung des zweiten Bremsmodus, bei welchem die zweite Überwachungsfunktion mittels der Auslöseeinheit 64 erledigt werden kann, ist die für die erste Überwachungsfunktion vorgesehene Auslöseeinheit 60 inaktiv, indem eine permanente, von der Konfiguration der Auslöseeinheit 60 unabhängige elektrische Verbindung zwischen einer Spannungsquelle 70 und dem Aktuator 33 hergestellt ist. Für die Schalteinheit 32 ist außerdem eine Rückstelleinheit 72 vorgesehen, die dazu dient, die erste Bremssteuereinheit 28 nach Ende des zweiten Bremsmodus bzw. nach Beendigung eines Bremsvorgangs mittels der Bremseinrichtung 17 wieder in Betrieb zu nehmen. Dies erfolgt mittels eines Signals S, welches einen Aktuator 74 betätigt, durch den ein Schalter 76 die elektrische Verbindung des Aktuators 33 mit der Spannungsquelle 70 trennt. Mit dieser Trennung erfolgt eine Aktivierung des Aktuators 33, welcher folgende Schaltvorgänge ausführt: Die Schalteinheit 32 wird zurückgestellt, sodass die Bremssteuereinheit 28 wieder mit der Leistungsversorgungseinheit 20 wirksam verbunden wird; Der Schalter 68 wird betätigt, sodass eine elektrische Verbindung der Spannungsquelle 62 mit dem Aktuator 55 hergestellt und dadurch die Auslöseeinheit 64 deaktiviert werden; Ein Schalter 78 trennt eine elektrische Verbindung zwischen einer Spannungsquelle 80 und dem Aktuator 74, sodass die Rückstelleinheit 72 deaktiviert wird bzw. keine Betätigung des Schalters 76 durch den Aktuator 74 mittels des Signals S erfolgen kann. Eine Betätigung des Schalters 78 zur Aktivierung der Rückstelleinheit 72 setzt eine Beendigung des Zustands, der zum Ansprechen der Überwachung geführt hat, voraus.

Die erste und zweite Überwachungsfunktionen, die von der Bremsüberwachungseinrichtung 53 durchgeführt werden, gehören zu einem ersten Überwachungsmodus der Bremsvorrichtung des Schienenfahrzeugs 10, in welchem die erste Bremse 24 überwacht wird. Dabei wird eine Überwachungsrolle für die Einleitung einer der oben beschriebenen Rückfallmaßnahmen betreffend die erste Bremse 24 von der zweiten Bremse 124, insbesondere von deren Bremsregelungseinheit 122 angenommen.

Die Bremsvorrichtung des Schienenfahrzeugs 10 ist mit einem zweiten Überwachungsmodus vorgesehen, in welchem die zweite Bremse 124 überwacht wird. Im betrachteten Ausführungsbeispiel wird eine Überwachungsrolle für die Einleitung einer der oben beschriebenen Rückfallmaßnahmen betreffend die zweite Bremse 124 von der ersten Bremse 24, insbesondere von deren Bremsregelungseinheit 22 angenommen. Die Bremsregelungseinheit 22 der ersten Bremse 24 bildet zusammen mit der Überwachungseinheit 56 eine zweite Bremsüberwachungseinrichtung 153, die dazu vorgesehen ist, eine Bremswirkungskenngröße B2 für die Einleitung einer Rückfallmaßnahme betreffend die zweite Bremse 124 zu berücksichtigen. Die Bremsüberwachungseinrichtung 153 ist wie die Bremsüberwachungseinrichtung 53 mit zwei Überwachungsfunktionen ausgestattet, welche jeweils zur Überwachung der zweiten Bremse 124 bei der Ausführung von deren erstem Bremsmodus bzw. zweitem Bremsmodus vorgesehen sind. Die Bremssteuereinheiten 28, 30 sind bei der Ausführung der Überwachungsfunktionen als Überwachungsvorrichtungen 27, 29 der Bremsüberwachungseinrichtung 153 ausgebildet. Bei der Ausführung der ersten Überwachungsfunktion und der zweiten Überwachungsfunktion ist die Bremsüberwachungseinrichtung 153 als Bremswirkungsüberwachungseinheit 150 bzw. 152 für den ersten bzw. zweiten Bremsmodus der Bremsregelungseinheit 122 der zweiten Bremse 124 ausgebildet. Diese Überwachung erfolgt abhängig von einer zweiten Bremswirkungskenngröße B2 oder von mehreren, in ihrer Art voneinander unterschiedlichen Bremswirkungskenngrößen, welche von einer Sensoreinheit 158 erfasst wird bzw. werden. Die obige Beschreibung zur Sensoreinheit 58 gilt entsprechend für die Sensoreinheit 158.

In einer besonderen Ausführung können die Sensoreinheiten 58 und 158 bezüglich einer Hardware zumindest teilweise von einer gleichen Sensorstruktur gebildet sein.

Der Übersichtlichkeit halber ist in Figur 3 lediglich die Überwachung der ersten Bremse 24 durch die zweite Bremse 124 dargestellt. Die obige Beschreibung der von der Bremsüberwachungseinrichtung 53 durchgeführten Überwachungsfunktionen findet für die erste Bremse 24 bezüglich der Überwachung der zweiten Bremse 124 entsprechende Anwendung. Dabei werden die entsprechenden Überwachungsfunktionen durch die Bremssteuereinheiten 28, 30 in deren Funktion als Überwachungsvorrichtungen 27, 29 im Zusammenwirken mit der Überwachungseinheit 56 durchgeführt.

Die Überwachungseinheit 56 ist im betrachteten Ausführungsbeispiel gemeinsamer Bestandteil der ersten Bremsüberwachungseinrichtung 53 und der zweiten Bremsüberwachungseinrichtung 153.

Die Ausführung der Überwachungsfunktionen kann in den Bremssteuereinheiten 28, 30, 128, 130 in deren Funktion als Überwachungsvorrichtungen 27, 29, 127, 129 jeweils mittels einer Recheneinheit erfolgen, die identisch zu oder unterschiedlich von der Recheneinheit ausgebildet ist, die zur Ausführung eines Bremsmodus vorgesehen ist.

Mit der Schnittstelle zur Fahrzeugnotbremsleitung 42 kann eine Notbremsung mittels der elektrodynamischen Bremsen 24, 124 ausgelöst werden. Mit dem Sicherheitsniveau, welches durch die vorgeschlagene Ausbildung der Schienenfahrzeugbremsvorrichtung, insbesondere bei einer Ausbildung der Bremsregelungseinheiten mit zumindest zwei Bremssteuereinheiten, erreichbar ist, kann ein Schienenfahrzeug mit einer Notbremseeinrichtung bereitgestellt werden, wobei eine Notbremsung ausschließlich mittels der elektrodynamischen Bremsen mit einem ausreichenden Sicherheitsniveau erfolgen kann. Hierdurch kann auf eine vollwertige, zusätzliche Reibungsbremse vorteilhaft verzichtet werden. Für geringere Geschwindigkeiten kann als Reibungsbremse lediglich eine Feststellbremse, beispielsweise in Form einer Federspeicherbremse, erhalten bleiben, die durch eine mittels eines Federspeichers erzeugte Reibkraft ein Wegrollen des abgestellten Fahrzeugs am Hang verhindert. Damit kann eine deutliche Verringerung der Kosten von Bremskomponenten und des Gewichts des Schienenfahrzeugs erzielt werden.

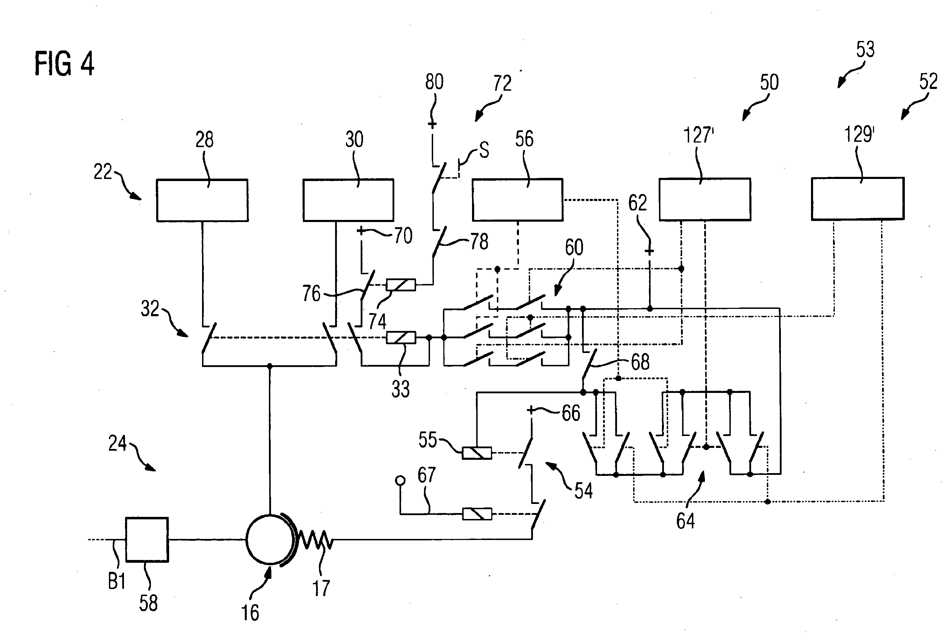

Figur 4 zeigt eine Ausführungsvariante, bei welcher die Bremsüberwachungseinrichtung 53 zwei Überwachungsvorrichtungen 127' und 129' aufweist. Diese sind der ersten Bremse 24 zugeordnet und von einer weiteren Bremse des Schienenfahrzeugs 10, insbesondere von der zweiten Bremse 124 unabhängig. Sie unterscheidet sich von der in Figur 3 gezeigten Ausführung der Überwachungsvorrichtungen 127, 129 dadurch, dass sie von einer Ausbildung als Bremssteuereinheit abweichen. Sie können insbesondere ausschließlich für die Ausführung der Überwachungsfunktionen der Bremsüberwachungseinrichtung 53 ausgestattet sein, die damit von einer Rolle als Bremsregelungseinheit abweicht. Bezüglich der Ausführung der Überwachungsfunktionen und ein Zusammenwirken mit der Überwachungseinheit 56 wird um unnötige Wiederholungen zu vermeiden auf die obige Beschreibung der Überwachungsvorrichtungen 127, 129 verwiesen.

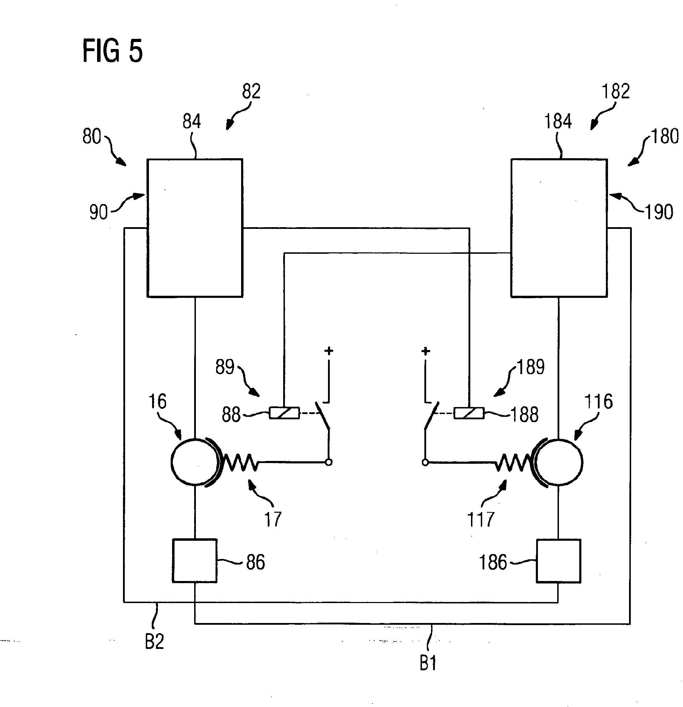

Figur 5 zeigt eine alternative Ausführung von zwei elektrodynamischen Bremsen 80, 180 des Schienenfahrzeugs 10. Die erste Bremse 80 ist vom Antriebsmotor 18 der Antriebseinheit 16 und einer Bremsregelungseinheit 82 gebildet, die die Leistungsversorgungseinheit 20 der Antriebseinheit 16 und eine Bremssteuereinheit 84 umfasst, welche in einem Bremsmodus die Leistungsversorgungseinheit 20 zur Bereitstellung einer Bremswirkung steuert. Die zweite Bremse 180 ist vom Antriebsmotor der Antriebseinheit 116 und einer Bremsregelungseinheit 182 gebildet, die die Leistungsversorgungseinheit der Antriebseinheit 116 und eine Bremssteuereinheit 184 umfasst, welche in einem Bremsmodus die Leistungsversorgungseinheit der Antriebseinheit 116 zur Bereitstellung einer Bremswirkung steuert.

Im Unterschied zur Ausführung der vorherigen Figuren weisen die Bremsregelungseinheiten 82 und 182 jeweils eine einzige Bremssteuereinheit 84 bzw. 184 auf. Zur Steuerungsfunktion der Bremssteuereinheiten 84, 184 im Bremsmodus findet die Beschreibung oben zu den Bremssteuereinheiten 28 und/oder 30 entsprechende Anwendung.

Neben deren Steuerungsfunktionen ist die Bremssteuereinheit 84 der ersten Bremse 80 zur Ausführung eines ersten Überwachungsmodus der Bremsvorrichtung des Schienenfahrzeugs 10 mit einer Überwachungsfunktion ausgestattet, in welcher sie die zweite Bremse 180 während der Ausführung von deren Bremsmodus überwacht und abhängig von einer Bremswirkungskenngröße B2 eine Rückfallmaßnahme für die zweite Bremse einleitet. Dabei dient die Bremsregelungseinheit 82 der ersten Bremse 80 als Bremsüberwachungseinrichtung 90 für die zweite Bremse 180. Die Bremswirkungskenngröße B2 wird von einer Sensoreinheit 186 erfasst, welche in Wirkverbindung mit der Bremssteuereinheit 84 steht. Die obige Beschreibung zur Sensoreinheit 58 findet entsprechende Anwendung für die Sensoreinheit 186 und die weiter unten beschriebene Sensoreinheit 86. Ergibt sich - bei einer Auswertung der Bremswirkungskenngröße B2 durch die Bremssteuereinheit 84 - dass die von der zweiten Bremse 180 erzeugte Bremswirkung nicht ausreichend ist, wird von der Bremssteuereinheit 84 eine Rückfallmaßnahme für die zweite Bremse 180 eingeleitet, indem beispielsweise die Bremseinrichtung 117 mittels eines Aktuators 188 einer Schaltvorrichtung 189 aktiviert wird.

Neben deren Steuerungsfunktionen ist die Bremssteuereinheit 184 der zweiten Bremse 180 zur Ausführung eines zweiten Überwachungsmodus der Bremsvorrichtung des Schienenfahrzeugs 10 mit einer Überwachungsfunktion ausgestattet, in welcher sie die erste Bremse 80 während der Ausführung von deren Bremsmodus überwacht und abhängig von einer Bremswirkungskenngröße B1 eine Rückfallmaßnahme für die erste Bremse 80 einleitet. Dabei dient die Bremsregelungseinheit 182 der zweiten Bremse 180 als Bremsüberwachungseinrichtung 190 für die erste Bremse 80. Die Bremswirkungskenngröße B1 wird von einer Sensoreinheit 86 erfasst, welche in Wirkverbindung mit der Bremssteuereinheit 184 steht. Ergibt sich - bei einer Auswertung der Bremswirkungskenngröße B1 durch die Bremssteuereinheit 184 - dass die von der ersten Bremse 80 erzeugte Bremswirkung nicht ausreichend ist, wird von der Bremssteuereinheit 184 eine Rückfallmaßnahme für die erste Bremse 80 eingeleitet, indem beispielsweise die Bremseinrichtung 17 mittels eines Aktuators 88 einer Schaltvorrichtung 89 aktiviert wird.

In den in den Figuren 3 bis 5 gezeigten Ausführungen können die Antriebseinheiten 16 und 116 einem gleichen Drehgestell des Schienenfahrzeugs 10 oder separaten Drehgestellen zugeordnet sein. In der in Figur 1 gezeigten Ausführung sind die Antriebseinheiten 16, 116 jeweils einem unterschiedlichen Drehgestell zugeordnet. Hierbei werden die Antriebsachsen 14 eines gleichen Drehgestells jeweils durch einen eigenen Antriebsmotor angetrieben, wobei beide Antriebsmotoren durch die gleiche Leistungsversorgungseinheit versorgt werden. Bei den in den Figuren 3 bis 5 gezeigten Bremsvorrichtungen sind dann in dieser Ausführung die elektrodynamischen Bremsen 24, 124 bzw. 80, 180 jeweils unterschiedlichen Drehgestellen und daher mehreren Antriebsachsen zugeordnet. Durch die Bremsüberwachungseinrichtungen 53, 153, 90, 190 kann demnach eine drehgestellweise Lokalisierung eines Bremswirkungsverlusts erreicht werden und es kann eine Rückfallmaßnahme in Bezug auf das jeweilige Drehgestell differenziert eingeleitet werden.

In einer alternativen Ausführung ist für jede angetriebene Achse eines Drehgestells ein Antriebsmotor vorgesehen, wobei für jeden Antriebsmotor dieses Drehgestells jeweils eine unterschiedliche Leistungsversorgungseinheit vorgesehen ist. In dieser Ausführung ist demnach jeder angetriebenen Achse des Drehgestells jeweils eine separate elektrodynamische Bremse zugeordnet. Bei den in den Figuren 3 bis 5 gezeigten Bremsvorrichtungen sind dann in dieser Ausführung die elektrodynamischen Bremsen 24, 124 bzw. 80, 180 einem gleichen Drehgestell bzw. jeweils einer unterschiedlichen Antriebsachse in diesem Drehgestell zugeordnet. Durch die Bremsüberwachungseinrichtungen 53, 153, 90, 190 kann demnach eine achsenweise Lokalisierung eines Bremswirkungsverlusts erreicht werden und es kann eine Rückfallmaßnahme in Bezug auf die jeweilige Antriebsachse differenziert eingeleitet werden.

## Patentansprüche

1. Schienenfahrzeugbremsvorrichtung mit zumindest einer ersten elektrodynamischen Bremse (24; 80), die eine Antriebseinheit (16), welche zumindest einen Antriebsmotor (18) und eine Leistungsversorgungseinheit (20) zum Versorgen des Antriebsmotors (18) in einem Traktionsmodus der Antriebseinheit (16) aufweist, und zumindest eine Bremsregelungseinheit (22; 82) umfasst, welche die jeweilige Leistungsversorgungseinheit (20) und zumindest eine Bremssteuereinheit (28, 30; 84) aufweist, die in einem ersten Bremsmodus die jeweilige Leistungsversorgungseinheit (20) zur Bereitstellung einer Bremswirkung steuert,
**gekennzeichnet durch**
zumindest eine Sensoreinheit (58; 86), die dazu vorgesehen ist, zumindest eine Bremswirkungskenngröße (B1) für den ersten Bremsmodus der Bremse (24; 80) zu erfassen, und zumindest eine der ersten Bremse (24; 80) zugeordnete, von der Bremsregelungseinheit (22; 82) unabhängige erste Bremsüberwachungseinrichtung (53; 190), die dazu vorgesehen ist, in einem ersten Überwachungsmodus die Bremswirkungskenngröße (B1) für die Einleitung einer Rückfallmaßnahme betreffend die Bremse (24; 80) zu berücksichtigen, wobei die Bremsüberwachungseinrichtung (53) zumindest zwei Überwachungsvorrichtungen (127, 129; 127', 129') aufweist, die sich bezüglich ihrer konstruktiven und/oder algorithmischen Ausführung voneinander unterscheiden.

2. Schienenfahrzeugbremsvorrichtung nach Anspruch 1,
**dadurch gekennzeichnet, dass**
die Überwachungsvorrichtungen (127, 129; 127', 129') dazu vorgesehen sind, zumindest eine Überwachungsfunktion des ersten Überwachungsmodus zumindest teilweise im Zusammenwirken durchzuführen.

3. Schienenfahrzeugbremsvorrichtung nach Anspruch 1 oder 2,
**dadurch gekennzeichnet, dass**
die Überwachungsvorrichtungen (127, 129; 127', 129') jeweils eine Software für die Ausführung einer Überwachungsfunktion aufweisen, wobei die Software unterschiedlich implementiert sind.

4. Schienenfahrzeugbremsvorrichtung nach einem der vorhergehenden Ansprüche,
**gekennzeichnet durch**
eine Überwachungseinheit (56), die dazu dient, den ersten Überwachungsmodus zumindest teilweise im Zusammenwirken mit den Überwachungsvorrichtungen (127, 129; 127', 129') durchzuführen.

5. Schienenfahrzeugbremsvorrichtung nach Anspruch 4,
**dadurch gekennzeichnet, dass**
sich die Überwachungsvorrichtungen ((127, 129; 127', 129') und die Überwachungseinheit (56) bezüglich ihrer konstruktiven und/oder algorithmischen Ausführung voneinander unterscheiden.

6. Schienenfahrzeugbremsvorrichtung nach Anspruch 4 oder 5,
**dadurch gekennzeichnet, dass**
die Überwachungsvorrichtungen (127, 129; 127', 129') der Bremsüberwachungseinrichtung (53) und die Überwachungseinheit (56) jeweils dazu vorgesehen sind, bei der Ausführung des ersten Überwachungsmodus abhängig von einer Bremswirkungskenngröße (B1) ein Fehlersignal auszugeben, wobei diese Bremsüberwachungseinrichtung (53) wenigstens eine Auslöseeinheit (60, 64) aufweist, die mit den Überwachungsvorrichtungen (127, 129; 127', 129') und der Überwachungseinheit (56) derart in Wirkverbindung steht, dass die Einleitung der Rückfallmaßnahme das Vorliegen von zumindest zwei Fehlersignalen voraussetzt.

7. Schienenfahrzeugbremsvorrichtung nach einem der vorhergehenden Ansprüche,
**dadurch gekennzeichnet, dass**
die Bremsregelungseinheit (22) zumindest zwei Bremssteuereinheiten (28, 30) und eine Schalteinheit (32) aufweist, die dazu vorgesehen ist, zur Durchführung der Rückfallmaßnahme zwischen dem ersten Bremsmodus der Bremsregelungseinheit (22), in welchem die erste Bremssteuereinheit (28) die Leistungsversorgungseinheit (20) zur Bereitstellung einer Bremswirkung steuert, und einem zweiten Bremsmodus der Bremsregelungseinheit (22) umzuschalten, in welchem die zweite Bremssteuereinheit (30) die Leistungsversorgungseinheit (20) zur Bereitstellung einer Bremswirkung steuert.

8. Schienenfahrzeugbremsvorrichtung nach Anspruch 7,
**dadurch gekennzeichnet, dass**
die Bremsüberwachungseinrichtung (53) im ersten Überwachungsmodus eine erste Überwachungsfunktion, bei welcher diese Bremsüberwachungseinrichtung (53) als erste Bremswirkungsüberwachungseinheit (50) ausgebildet ist, die dazu vorgesehen ist, die Bremse (24) in deren erstem Bremsmodus zu überwachen, und zumindest eine zweite Überwachungsfunktion aufweist, bei welcher diese Bremsüberwachungseinrichtung (53) als zweite Bremswirkungsüberwachungseinheit (52) ausgebildet ist, die dazu vorgesehen ist, die Bremse (24) in deren zweitem Bremsmodus zu überwachen.

9. Schienenfahrzeugbremsvorrichtung nach einem der vorhergehenden Ansprüche,
**gekennzeichnet durch**
eine weitere Bremseinrichtung (17) und eine Schaltvorrichtung (54; 89), wobei abhängig von der Bremswirkungskenngröße (B1) als Rückfallmaßnahme diese weitere Bremseinrichtung (17) mittels der Schaltvorrichtung (54; 89) betätigt wird.

10. Schienenfahrzeugbremsvorrichtung nach einem der vorhergehenden Ansprüche,
**gekennzeichnet durch**
zumindest eine zweite elektrodynamische Bremse (124; 180), die eine Antriebseinheit (116), welche zumindest einen Antriebsmotor und eine Leistungsversorgungseinheit zum Versorgen des Antriebsmotors in einem Traktionsmodus der Antriebseinheit (116) aufweist, und zumindest eine Bremsregelungseinheit (122; 182) umfasst, welche die jeweilige Leistungsversorgungseinheit und zumindest eine Bremssteuereinheit (128, 130; 184) aufweist, die in einem ersten Bremsmodus die jeweilige Leistungsversorgungseinheit zur Bereitstellung einer Bremswirkung steuert.

11. Schienenfahrzeugbremsvorrichtung nach Anspruch 10,
**gekennzeichnet durch**
zumindest eine Sensoreinheit (158; 186), die dazu vorgesehen ist, zumindest eine Bremswirkungskenngröße (B2) für den ersten Bremsmodus der zweiten Bremse (124; 180) zu erfassen, und zumindest eine der zweiten Bremse (124; 180) zugeordnete, von der Bremsregelungseinheit (122; 182) der zweiten Bremse (124,; 180) unabhängige zweite Bremsüberwachungseinrichtung (153; 90), die dazu vorgesehen ist, in einem zweiten Überwachungsmodus diese Bremswirkungskenngröße (B2) für die Einleitung einer Rückfallmaßnahme betreffend die zweite Bremse (124; 180) zu berücksichtigen.

12. Schienenfahrzeugbremsvorrichtung nach Anspruch 11,
**gekennzeichnet durch**
eine Überwachungseinheit (56), die gemeinsamer Bestandteil der ersten Bremsüberwachungseinrichtung (53) und der zweiten Bremsüberwachungseinrichtung (153) ist.

13. Schienenfahrzeugbremsvorrichtung nach einem der Ansprüche 10 bis 12,
**dadurch gekennzeichnet, dass**
die der ersten Bremse (24; 80) zugeordnete erste Bremsüberwachungseinrichtung (53; 190) zumindest von der Bremsregelungseinheit (122; 182) der zweiten Bremse (124; 180) gebildet ist.

14. Schienenfahrzeugbremsvorrichtung zumindest nach Anspruch 13,
**dadurch gekennzeichnet, dass**
die Bremsregelungseinheit (122) der zweiten Bremse (124) zumindest zwei Bremssteuereinheiten (128, 130) und eine Schalteinheit (132) aufweist, die dazu vorgesehen ist, zur Durchführung der Rückfallmaßnahme zwischen dem ersten Bremsmodus der Bremsregelungseinheit (122), in welchem die erste Bremssteuereinheit (128) die jeweilige Leistungsversorgungseinheit zur Bereitstellung einer Bremswirkung steuert, und einem zweiten Bremsmodus der Bremsregelungseinheit (122) umzuschalten, in welchem die zweite Bremssteuereinheit (130) die jeweilige Leistungsversorgungseinheit zur Bereitstellung einer Bremswirkung steuert, wobei die Überwachungsvorrichtungen (127, 129) der ersten Bremsüberwachungseinrichtung (53) jeweils von einer unterschiedlichen Bremssteuereinheit (128, 130) der diese Bremsüberwachungseinrichtung (53) bildenden Bremsregelungseinheit (122) der zweiten Bremse (124) gebildet sind.

15. Schienenfahrzeugbremsvorrichtung nach Anspruch 13 oder 14,
**dadurch gekennzeichnet, dass**
die der zweiten Bremse (124) zugeordnete zweite Bremsüberwachungseinrichtung (153) zumindest von der Bremsregelungseinheit (22) der ersten Bremse (24) gebildet ist.

## Claims

1. Rail vehicle braking device comprising at least one first electrodynamic brake (24; 80), which comprises a drive unit (16), which has at least one drive motor (18) and a power supply unit (20) for supplying power to the drive motor (18) in a traction mode of the drive unit (16), and at least one braking regulation unit (22; 82), which has the respective power supply unit (20) and at least one braking control unit (28, 30; 84), which, in a first braking mode, controls the respective power supply unit (20) so as to provide a braking effect,
**characterized by**
at least one sensor unit (58; 86), which is provided for detecting at least one braking effect characteristic quantity (B1) for the first braking mode of the brake (24; 80), and at least one first braking monitoring apparatus (53; 190), which is assigned to the first brake (24; 80), is independent of the braking regulation unit (22; 82) and is provided for taking into consideration the braking effect characteristic quantity (B1) for initiating a fallback measure relating to the brake (24; 80) in a first monitoring mode, wherein the braking monitoring apparatus (53) has at least two monitoring devices (127, 129; 127', 129'), which differ from one another with respect to their structural and/or algorithmic design.

2. Rail vehicle braking device according to Claim 1,
**characterized in that**
the monitoring devices (127, 129; 127', 129') are provided for implementing, at least partially in interaction, at least one monitoring function of the first monitoring mode.

3. Rail vehicle braking device according to Claim 1 or 2,
**characterized in that**
the monitoring devices (127, 129; 127', 129') each have software for executing a monitoring function, wherein the software is implemented differently.

4. Rail vehicle braking device according to one of the preceding claims,
**characterized by**
a monitoring unit (56), which is used for performing the first monitoring mode at least partially in interaction with the monitoring devices (127, 129; 127', 129').

5. Rail vehicle braking device according to Claim 4,
**characterized in that**
the monitoring devices (127, 129; 127', 129') and the monitoring unit (56) differ from one another with respect to their structural and/or algorithmic design.

6. Rail vehicle braking device according to Claim 4 or 5,
**characterized in that**
the monitoring devices (127, 129; 127', 129') of the braking monitoring apparatus (53) and the monitoring unit (56) are each provided for outputting an error signal during execution of the first monitoring mode depending on a braking effect characteristic quantity (B1), wherein this braking monitoring apparatus (53) has at least one trigger unit (60, 64), which is operatively connected to the monitoring devices (127, 129; 127', 129') and the monitoring unit (56) in such a way that the initiation of the fallback measure presupposes the presence of at least two error signals.

7. Rail vehicle braking device according to one of the preceding claims,
**characterized in that**
the braking regulation unit (22) has at least two braking control units (28, 30) and a switching unit (32), which is provided for switching over between the first braking mode of the braking regulation unit (22), in which the first braking control unit (28) controls the power supply unit (20) so as to provide a braking effect, and a second braking mode of the braking regulation unit (22), in which the second braking control unit (30) controls the power supply unit (20) so as to provide a braking effect, in order to implement the fallback measure.

8. Rail vehicle braking device according to Claim 7,
**characterized in that**
the braking monitoring apparatus (53), in the first monitoring mode, has a first monitoring function, in which this braking monitoring apparatus (53) is in the form of a first braking effect monitoring unit (50), which is provided for monitoring the brake (24) in the first braking mode thereof, and at least one second monitoring function, in which this braking monitoring apparatus (53) is in the form of a second braking effect monitoring unit (52), which is provided for monitoring the brake (24) in the second braking mode thereof.

9. Rail vehicle braking device according to one of the preceding claims,
**characterized by**
a further braking apparatus (17) and a switching device (54; 89), wherein, as fallback measure, this further braking apparatus (17) is actuated by means of the switching device (54; 89) depending on the braking effect characteristic quantity (B1).

10. Rail vehicle braking device according to one of the preceding claims,
**characterized by**
at least one second electrodynamic brake (124; 180), which comprises a drive unit (116), which has at least one drive motor and a power supply unit for supplying power to the drive motor in a traction mode of the drive unit (116), and at least one braking regulation unit (122; 182), which has the respective power supply unit and at least one braking control unit (128, 130; 184), which, in a first braking mode, controls the respective power supply unit so as to provide a braking effect.

11. Rail vehicle braking device according to Claim 10,
**characterized by**
at least one sensor unit (158; 186), which is provided for detecting at least one braking effect characteristic quantity (B2) for the first braking mode of the second brake (124; 180), and at least one second braking monitoring apparatus (153; 90), which is assigned to the second brake (124; 180), is independent of the braking regulation unit (122; 182) of the second brake (124; 180) and is provided for taking into consideration this braking effect characteristic quantity (B2) for initiating a fallback measure relating to the second brake (124; 180) in a second monitoring mode.

12. Rail vehicle braking device according to Claim 11,
**characterized by**
a monitoring unit (56), which is a common part of the first braking monitoring apparatus (53) and the second braking monitoring apparatus (153).

13. Rail vehicle braking device according to one of Claims 10 to 12,
**characterized in that**
the first braking monitoring apparatus (53; 190), which is assigned to the first brake (24; 80), is formed at least by the braking regulation unit (122; 182) of the second brake (124; 180) .

14. Rail vehicle braking device at least according to Claim 13,
**characterized in that**
the braking regulation unit (122) of the second brake (124) has at least two braking control units (128, 130) and a switching unit (132), which is provided for switching over between the first braking mode of the braking regulation unit (122), in which the first braking control unit (128) controls the respective power supply unit so as to provide a braking effect, and a second braking mode of the braking regulation unit (122), in which the second braking control unit (130) controls the respective power supply unit so as to provide a braking effect, in order to implement the fallback measure, wherein the monitoring devices (127, 129) of the first braking monitoring apparatus (53) are each formed by a different braking control unit (128, 130) of the braking regulation unit (122) of the second brake (124) forming this braking monitoring apparatus (53) .

15. Rail vehicle braking device according to Claim 13 or 14,
**characterized in that**
the second braking monitoring apparatus (153) assigned to the second brake (124) is formed at least by the braking regulation unit (22) of the first brake (24).

## Revendications

1. Dispositif de freinage d'un véhicule sur rails, comprenant au moins un premier frein (24; 80) électrodynamique, qui comprend une unité (16) d'entraînement, qui a au moins un moteur (18) d'entraînement et une unité (20) d'alimentation en puissance pour alimenter le moteur (18) d'entraînement dans un mode de traction de l'unité (16) d'entraînement, et au moins une unité (22; 82) de régulation du freinage, qui a l'unité (20) d'alimentation en puissance et au moins une unité (28, 30; 84) de commande du freinage, qui commande dans un premier mode de freinage l'unité (20) d'alimentation en puissance pour la mise à disposition d'un effet de freinage,
**caractérisé par**
au moins une unité (58; 86) de capteur, qui est prévue pour relever une grandeur (B1) caractéristique de l'effet de freinage pour le premier mode de freinage du frein (24; 80), et au moins un premier dispositif (53; 190) de contrôle du freinage, associé au premier frein (24; 80) et indépendant de l'unité (22; 82) de régulation du freinage, qui est prévu pour tenir compte dans un premier mode de contrôle de la grandeur (B1) caractéristique de l'effet de freinage pour amorcer une mesure de réarmement concernant le frein (24; 80), dans lequel le dispositif (53) de contrôle du freinage a au moins deux dispositifs (127, 129; 127', 129') de contrôle qui se distinguent par leur construction et/ou par leur algorithme.

2. Dispositif de freinage d'un véhicule sur rails suivant la revendication 1,
**caractérisé en ce que**
les dispositifs (127, 129; 127', 129') de contrôle sont prévus pour effectuer au moins une fonction de contrôle du premier mode de contrôle, au moins en partie, en coopération.

3. Dispositif de freinage d'un véhicule sur rails suivant l'une des revendications 1 ou 2,
**caractérisé en ce que**
les dispositifs (127, 129; 127', 129') de contrôle ont respectivement un logiciel pour l'exécution d'une fonction de contrôle, les logiciels étant mis en œuvre de manière différente.

4. Dispositif de freinage d'un véhicule sur rails suivant l'une des revendications précédentes,
**caractérisé par**
une unité (56) de contrôle, qui sert à effectuer le premier mode de contrôle, au moins en partie, en coopération avec les dispositifs (127, 129; 127', 129') de contrôle.

5. Dispositif de freinage d'un véhicule sur rails suivant la revendication 4,
**caractérisé en ce que**
les dispositifs (127, 129; 127', 129') de contrôle et l'unité (56) de contrôle se distinguent par leur construction et/ou par leur algorithme.

6. Dispositif de freinage d'un véhicule sur rails suivant l'une des revendications 4 ou 5,
**caractérisé en ce que**
les dispositifs (127, 129; 127', 129') de contrôle du dispositif (53) de contrôle du freinage et l'unité (53) de contrôle sont prévus respectivement pour, lors de l'exécution du premier mode de contrôle, émettre, en fonction d'une grandeur (B1) caractéristique de l'effet de freinage, un signal d'erreur, ce dispositif (53) de contrôle du freinage ayant au moins une unité (60, 64) de déclenchement, qui coopère avec les dispositifs (127, 129; 127', 129') de contrôle et avec l'unité (56) de contrôle, de manière à ce que l'amorçage de la mesure de réarmement suppose la présence d'au moins deux signaux d'erreur.

7. Dispositif de freinage d'un véhicule sur rails suivant l'une des revendications précédentes,
**caractérisé en ce que**
l'unité (22) de régulation du freinage a au moins deux unités (28, 30) de commande du freinage et une unité (32) de commutation, qui, pour effectuer la mesure de réarmement, est prévue pour commuter entre le premier mode de freinage de l'unité (22) de régulation du freinage, dans lequel la première unité (28) de commande du freinage commande l'unité (20) d'alimentation en puissance pour la mise à disposition d'un effet de freinage, et un deuxième mode de freinage de l'unité (22) de régulation du freinage, dans lequel la deuxième unité (30) de commande du freinage commande l'unité (20) d'alimentation en puissance pour la mise à disposition d'un effet de freinage.

8. Dispositif de freinage d'un véhicule sur rails suivant la revendication 7,
**caractérisé en ce que**
le dispositif (53) de contrôle du freinage a, dans un premier mode de contrôle, une première fonction de contrôle, dans laquelle ce dispositif (53) de contrôle du freinage est constitué en première unité (50) de contrôle de l'effet du freinage, qui est prévue pour contrôler le frein (24) dans son premier mode de freinage, et au moins une deuxième fonction de contrôle, dans laquelle ce dispositif (53) de contrôle du freinage est constitué en deuxième unité (52) de contrôle de l'effet du freinage, qui est prévue pour contrôler le frein (24) dans son deuxième mode de freinage.

9. Dispositif de freinage d'un véhicule sur rails suivant l'une des revendications précédentes,
**caractérisé par**
un autre dispositif (17) de freinage et un dispositif (54; 89) de commutation, dans lequel, en fonction de la grandeur (B1) caractéristique de l'effet de freinage comme mesure de réarmement, cet autre dispositif (17) de freinage est actionné au moyen du dispositif (54; 89) de commutation.

10. Dispositif de freinage d'un véhicule sur rails suivant l'une des revendications précédentes,
**caractérisé par**
au moins un deuxième frein (124; 180) électrodynamique, qui comprend une unité (116) d'entraînement, qui a au moins un moteur d'entraînement et une unité d'alimentation en puissance pour alimenter le moteur d'entraînement dans un mode de traction de l'unité (116) d'entraînement, et au moins une unité (122; 182) de régulation du freinage, qui a l'unité d'alimentation en puissance et au moins une unité (128, 130; 184) de commande du freinage, qui commande dans un premier mode de freinage l'unité d'alimentation en puissance pour la mise à disposition d'un effet de freinage.

11. Dispositif de freinage d'un véhicule sur rails suivant la revendication 10,
**caractérisé par**
au moins une unité ( 158; 186 ) de capteur, qui est prévue pour détecter au moins une grandeur ( B2 ) caractéristique de l'effet de freinage pour le premier mode de freinage du deuxième frein ( 124; 180 ), et au moins un deuxième dispositif ( 153; 90 ) de contrôle du freinage, associé au deuxième frein ( 124; 180 ) et indépendant de l'unité ( 122; 182 ) de régulation du freinage du deuxième frein ( 124; 180 ), qui est prévu pour tenir compte, dans un deuxième mode de contrôle, de cette grandeur ( B2 ) caractéristique de l'effet de freinage pour l'amorçage d'une mesure de réarmement concernant le deuxième frein ( 124; 180 ).

12. Dispositif de freinage d'un véhicule sur rails suivant la revendication 11,
**caractérisé par**
une unité ( 56 ) de contrôle, qui fait partie conjointement du premier dispositif ( 53 ) de contrôle du freinage et du deuxième dispositif ( 153 ) de contrôle du freinage.

13. Dispositif de freinage d'un véhicule sur rails suivant l'une des revendications 10 à 12,
**caractérisé en ce que**
le premier dispositif ( 53; 190 ) de contrôle du freinage associé au premier frein ( 24; 80 ) est formé au moins par l'unité ( 122; 182 ) de régulation du freinage du deuxième frein ( 124; 180 ).

14. Dispositif de freinage d'un véhicule sur rails au moins suivant la revendication 13,
**caractérisé en ce que**
l'unité ( 122 ) de régulation du freinage du deuxième frein ( 124 ) a au moins deux unités ( 128, 130 ) de commande du freinage et une unité ( 132 ) de commutation, qui, pour effectuer la mesure de réarmement, est prévue pour commuter entre le premier mode de freinage de l'unité ( 122 ) de régulation du freinage, dans lequel la première unité ( 128 ) de commande du freinage commande l'unité d'alimentation en puissance pour la mise à disposition d'un effet de freinage, et un deuxième mode de freinage de l'unité ( 122 ) de régulation du freinage, dans lequel la deuxième unité ( 130 ) de commande du freinage commande l'unité d'alimentation en puissance pour la mise à disposition d'un effet de freinage, les dispositifs ( 127, 129 ) de contrôle du premier dispositif ( 53 ) de contrôle du freinage étant formés respectivement d'une unité ( 128, 130 ) de commande du freinage différente de l'unité ( 122 ) de régulation du freinage, formant cette unité ( 53 ) de contrôle du freinage, du deuxième frein ( 124 ).

15. Dispositif de freinage d'un véhicule sur rails suivant la revendication 13 ou 14,
**caractérisé en ce que**
le deuxième dispositif ( 153 ) de contrôle du freinage associé au deuxième frein ( 124 ) est formé au moins par l'unité ( 22 ) de régulation du freinage du premier frein ( 24 ).
